# DEMANDE DE BREVET EUROPEEN

(11) **EP 4 141 810 A1**
(43) Date de publication de la demande: **01.03.2023**
(21) Numéro de dépôt: 22187274.0
(22) Date de dépôt: 27.07.2022
(51) Int. Cl.: G06V 10/94, G06V 40/12, G06F 21/32

(54) **ENRÔLEMENT DIGITAL SÉCURISÉ AVEC UNE CARTE À PUCE**

(30) Priorité: 26.08.2021 FR 2108946
(71) Demandeur: IDEMIA France, 92400 Courbevoie (FR)
(72) Inventeur: AUBIN, Yann-Loïc, 92400 COURBEVOIE (FR); DEPRUN, Jean-François, 92400 COURBEVOIE (FR)
(74) Mandataire: Cabinet Beau de Loménie

(57) **Abrégé**

L'invention concerne un procédé réalisé par une carte à puce (CD1) comprenant un capteur d'empreinte digitale (8), le procédé comprenant une phase d'authentification comprenant : acquisition d'une séquence (SQ1) d'empreintes d'objet (PT1) à partir d'objets détectés au cours du temps par le capteur d'empreinte digitale (8) ; comparaison de la séquence (SQ1) d'empreintes d'objet avec des données de référence (DREF1) définissant une séquence de référence (SQ0) d'empreintes d'objets selon au moins deux types d'empreinte (TY1, TY2) différents ; et détermination que la phase d'authentification est réussie si la séquence (SQ1) d'empreintes d'objet coïncide avec les données de référence (DREF1). Lors d'une phase d'enrôlement digital, la carte à puce (CD1) génère, à partir d'au moins une empreinte digitale (PT2), dite empreinte digitale d'enrôlement, des données d'enrôlement digital (DREF2) ; et enregistre ces données d'enrôlement digital (DRFE2) de sorte à permettre une authentification digitale ultérieure à partir desdites données d'enrôlement digital.

## Description

### Domaine Technique

La présente invention se rapporte à l'authentification par empreinte digitale, et concerne plus particulièrement la sécurisation d'un enrôlement digital auprès d'une carte à puce, pour permettre une authentification digitale ultérieure d'un utilisateur.

### Technique antérieure

De nombreuses améliorations ont été développées pour les cartes à puce ces dernières années. L'une d'elles consiste à équiper une carte à puce d'un capteur d'empreinte digitale pour authentifier un utilisateur, en particulier pour sécuriser des transactions réalisées au moyen de la carte à puce. Ainsi, selon le résultat d'une vérification d'empreinte digitale réalisée au moyen de son capteur d'empreinte digital, une telle carte à puce peut accepter ou rejeter une transaction, ce qui permet de limiter les risques d'utilisations frauduleuses de la carte.

Pour pouvoir réaliser une authentification digitale d'un utilisateur, une carte à puce embarquant un capteur d'empreinte digitale stocke généralement en mémoire des données digitales de référence qui sont utilisées pour vérifier la validité d'une empreinte digitale acquise lors d'une phase d'authentification. Chaque phase d'authentification d'un utilisateur repose ainsi sur ces données digitales de référence auxquelles la carte à puce doit accéder pour déterminer si l'utilisateur faisant l'objet de l'authentification est un utilisateur autorisé ou non. Pour ce faire, la carte à puce doit réaliser une phase d'enrôlement, préalablement aux phases d'authentification, au cours de laquelle la carte à puce enregistre un modèle d'empreinte digitale en tant que données digitales de référence.

Dans la mesure où elle définit quel utilisateur sera autorisé par la suite à utiliser la carte à puce, cette phase d'enrôlement présente donc un caractère particulièrement sensible du point de vue de la sécurité. Il convient de sécuriser cette phase d'enrôlement afin de s'assurer que les données digitales de référence sont acquises et enregistrées dans de bonnes conditions, de sorte à ce que seul un utilisateur légitime puisse être authentifié avec succès par la carte à puce.

Une méthode connue consiste à configurer la carte à puce de sorte à ce qu'elle authentifie le titulaire de la carte, lors de la phase d'enrôlement, à partir d'un code PIN secret dédié fourni à cet effet par l'émetteur de la carte. Toutefois, l'usage d'un tel code secret pose des difficultés techniques dans la mesure où les cartes à puce comportent traditionnellement des ressources très limitées, notamment en termes de moyens d'interface entre l'utilisateur et la carte à puce. En général, une carte à puce est dépourvue d'interface utilisateur, ou tout du moins comporte des moyens très limités d'interface utilisateur, en particulier en ce qui concerne les moyens d'entrée pour entrer des instructions d'utilisateur dans la carte.

Aussi, selon une technique particulière, le titulaire de la carte à puce utilise une application particulière exécutée par un terminal coopérant avec la carte pour saisir le code secret afin de s'authentifier lors de la phase d'enrôlement. Toutefois, le recours à un tel terminal présente aussi des difficultés techniques dans la mesure où ce terminal doit être sécurisé et adapté pour une telle phase d'authentification. En particulier, ce terminal doit comporter une interface utilisateur adaptée, notamment pour permettre au titulaire de la carte de saisir de façon sécurisée le code secret au niveau de l'interface utilisateur du terminal. Le recours à un tel terminal rend la phase d'enrôlement plus complexe, présente des risques en termes de sécurité, et pose problème lorsqu'un tel terminal n'est pas disponible.

Il existe donc un besoin pour une solution permettant un enrôlement digitale sécurisé auprès d'une carte à puce comprenant un capteur d'empreinte digitale, y compris lorsque la carte à puce présente des moyens limitées en termes d'interface utilisateur comme cela est généralement le cas.

### Exposé de l'invention

A cet effet, la présente invention concerne un procédé de traitement mis en oeuvre par une carte à puce comprenant un capteur d'empreinte digitale, le procédé comprenant :
a) une phase d'authentification comprenant :
   a1) acquisition d'une séquence d'empreintes d'objet à partir d'objets détectés au cours du temps par le capteur d'empreinte digitale ;
   a2) comparaison de la séquence d'empreintes d'objet acquise avec des données de référence préenregistrées dans la carte à puce, lesdites données de référence définissant une séquence de référence d'empreintes d'objets selon au moins deux types d'empreinte différents ; et
   a3) détermination que la phase d'authentification est réussie si la séquence d'empreintes d'objet coïncide avec les données de référence ;
b) une phase d'enrôlement digital comprenant :
   b1) génération, à partir d'au moins une empreinte digitale, dite empreinte digitale d'enrôlement, de données d'enrôlement digital ; et
   b2) enregistrement des données d'enrôlement digital de sorte à permettre une authentification digitale ultérieure à partir desdites données d'enrôlement digital.

Selon un mode de réalisation particulier, le procédé comprend préalablement à la phase d'authentification :
- enregistrement des données de référence dans une mémoire de la carte à puce. Selon un mode de réalisation particulier, la séquence de référence à respecter lors de la phase d'acquisition comprend au moins deux groupes d'empreinte acquis séquentiellement au cours du temps, chaque groupe d'empreinte comprenant au moins une empreinte d'objet acquise simultanément par le capteur d'empreinte digitale.

Selon un mode de réalisation particulier, le procédé comprend lors de la phase d'enrôlement b) :
b0) acquisition, par le capteur d'empreinte digitale, en tant qu'empreinte digitale d'enrôlement, d'au moins une empreinte digitale indépendamment de l'acquisition a1) de la séquence d'empreintes d'objet.

Selon un mode de réalisation particulier, au moins une dite empreinte digitale d'enrôlement, à partir de laquelle sont générées en b1) les données d'enrôlement digital, est une empreinte digitale acquise en a1) parmi la séquence d'empreintes d'objet.

Selon un mode de réalisation particulier, l'enregistrement b2) est réalisé avant la détermination a3), la phase d'enrôlement digitale comprenant en outre, suite à l'enregistrement b2) :
b3) effacement des données d'enrôlement digital en réponse à la détermination en a3) que la phase d'authentification a échoué.

Selon un mode de réalisation particulier, la phase d'enrôlement b) est déclenchée en réponse à la détermination en a3) que la phase d'authentification est réussie.

Selon un mode de réalisation particulier, selon la séquence de référence, une empreinte d'objet d'un premier type d'empreinte est intercalée dans le temps entre deux empreintes d'objet d'un autre type d'empreinte.

Selon un mode de réalisation particulier, chaque objet détecté par le capteur d'empreinte digitale en a1) est un doigt ou un outil.

Selon un mode de réalisation particulier, la phase d'authentification comprend :
- analyse de chaque empreinte d'objet de la séquence d'empreintes d'objet acquise en a1) pour déterminer si ladite empreinte d'objet comprend des minuties ;
- identification de chaque empreinte d'objet de la séquence d'empreintes d'objet acquise, soit en tant qu'empreinte d'outil correspondant à un premier type d'empreinte soit en tant qu'empreinte digitale correspondant au moins un autre type d'empreinte, en fonction de si ladite empreinte d'objet comprend des minuties ;
dans lequel, lors de la comparaison a2), la séquence d'empreintes d'objet acquise comprenant des empreintes du premier et dudit au moins un autre type d'empreinte est comparée avec la séquence de référence comprenant des empreintes du premier et dudit au moins un autre type d'empreinte.

Selon un mode de réalisation particulier, la phase d'authentification comprend :
- détermination d'une série de valeurs représentative de la séquence d'empreintes d'objet acquise, dans lequel chaque empreinte d'objet identifiée en tant qu'empreinte digitale est indiquée dans la série de valeurs par une occurrence d'une première valeur et chaque empreinte d'objet identifiée en tant qu'empreinte d'outil est indiquée dans la série de valeurs par une occurrence d'une deuxième valeur différente de la première valeur ; et
dans lequel, lors de la comparaison a2), la série de valeur représentant la séquence d'empreintes d'objet acquise est comparée avec les données de référence qui définissent, en tant que séquence de référence, une séquence de valeurs comprenant les première et deuxième valeurs.

Selon un mode de réalisation particulier, la séquence d'empreintes d'objet acquise comprend des empreintes digitales, la phase d'authentification comprenant :
- analyse de chaque empreinte digitale de la séquence d'empreintes d'objet acquise en a1) pour identifier des minuties dans les empreintes digitales de ladite séquence d'empreintes d'objet acquise;
- comparaison entre elles des empreintes digitales de ladite séquence d'empreintes d'objet acquise à partir des minuties identifiées de sorte à identifier au moins deux types différents d'empreinte digitale correspondant à au moins deux doigts différents ;
dans lequel, lors de la comparaison a2), la séquence d'empreintes d'objet acquise comprenant lesdits au moins deux types différents d'empreinte digitale est comparée avec la séquence de référence comprenant des empreintes digitales correspondant au moins à deux doigts différents.

Selon un mode de réalisation particulier, la phase d'authentification comprend :
- identification d'une empreinte digitale respective de la séquence d'empreintes d'objet acquise, en tant que modèle d'empreinte, pour chacun parmi lesdits au moins deux types différents d'empreinte digitale si ladite empreinte digitale correspond à un doigt détecté pour la première fois dans la séquence d'empreintes d'objet acquise ;
chaque modèle d'empreinte étant comparé avec les autres empreintes digitales de la séquence d'empreintes d'objet de sorte à identifier chaque dite autre empreinte digitale en tant que l'un parmi lesdits au moins deux types différents d'empreinte digital.

Selon un mode de réalisation particulier, la phase d'authentification comprend :
- identification d'au moins une première empreinte digitale et une deuxième empreinte digitale, parmi la séquence d'empreinte d'objets, en tant que modèles d'empreinte desdites au moins deux types différents d'empreinte digitale en fonction d'une position respective desdites au moins une première et deuxième empreintes digitales dans ladite séquence d'empreintes d'objet acquise en a1),
lesdites première et deuxième empreintes digitales servant de modèles d'empreinte étant comparées avec les autres empreintes digitales de la séquence d'empreintes d'objet de sorte à identifier chaque dite autre empreinte digitale en tant que l'un parmi lesdits au moins deux types différents d'empreinte digital correspondant à au moins deux doigts différents.

Selon un mode de réalisation particulier, le procédé comprend une deuxième phase d'authentification, ultérieure à la phase d'authentification a), comprenant :
c1) acquisition, par le capteur d'empreinte digitale, d'au moins une nouvelle empreinte digitale ;
c2) authentification à partir d'une comparaison de ladite au moins une nouvelle empreinte digitale avec les données d'enrôlement digital.

Dans un mode particulier de réalisation, les différentes étapes du procédé de traitement de l'invention sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un dispositif, tel qu'une carte à puce par exemple, ou plus généralement dans un ordinateur, ce programme comportant des instructions adaptées à la mise en oeuvre des étapes d'un procédé de traitement tel que défini ci-dessus et tel que décrit ci-après dans des modes de réalisation particuliers.

Ainsi, le procédé de l'invention peut être implémenté au moyen d'une mémoire non volatile stockant des instructions de programmes d'ordinateur et au moyen d'un processeur exécutant ces instructions.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et plus particulièrement par une carte à puce (et notamment par le processeur de la carte à puce), et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible ou ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

La présente invention vise également un dispositif, en particulier une carte à puce, apte à mettre en oeuvre le procédé de traitement tel que défini dans le présent document. En particulier, l'invention prévoit une carte à puce comprenant :
- un capteur d'empreinte digitale ;
- un module d'authentification configuré pour :
   ∘ acquérir une séquence d'empreintes d'objet à partir d'objets détectés au cours du temps par le capteur d'empreinte digitale ;
   ∘ comparer la séquence d'empreintes d'objet acquise avec des données de référence préenregistrées dans la carte à puce, lesdites données de référence définissant une séquence de référence d'au moins deux types d'empreinte différents ; et
   ∘ déterminer que la phase d'authentification est réussie si la séquence d'empreintes d'objet coïncide avec les données de référence ;
- un module d'enrôlement configuré pour :
   ∘ générer, à partir d'au moins une empreinte digitale, dite empreinte digitale d'enrôlement, des données d'enrôlement digital ; et
   ∘ enregistrer des données d'enrôlement digital de sorte à permettre une authentification digitale ultérieure à partir desdites données d'enrôlement digital.

A noter que les différents modes de réalisation mentionnés ci-avant (ainsi que ceux décrits ci-après) en relation avec le procédé de traitement de l'invention ainsi que les avantages associés s'appliquent de façon analogue au dispositif (en particulier à la carte à puce) de l'invention.

Pour chaque étape du procédé de traitement, le dispositif (en particulier la carte à puce) de l'invention peut comprendre un module correspondant configuré pour réaliser ladite étape.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel peut être exécuté par un processeur de données d'une entité physique (carte à puce, terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit défini dans ce document pour le module concerné. Il peut s'agir d'un composant matériel programmable ou avec processeur intégré pour l'exécution de logiciel.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement une carte à puce selon un mode de réalisation de l'invention ;
[Fig. 2] La figure 2 représente schématiquement une carte à puce coopérant avec un dispositif périphérique, selon au moins un mode de réalisation de l'invention ;
[Fig. 3] La figure 3 représente schématiquement des modules mis en oeuvre par une carte à puce selon un mode de réalisation particulier de l'invention ;
[Fig. 4A-4B] Les figures 4A-4B représentent schématiquement des séquences de référence à respecter pour authentifier un utilisateur, selon des modes de réalisation particulier ;
[Fig. 5] La figure 5 représente schématiquement, sous forme d'un diagramme, les étapes d'un procédé de traitement selon un mode de réalisation de l'invention ;
[Fig. 6] La figure 6 représente schématiquement, sous forme d'un diagramme, les étapes d'un procédé de traitement selon un mode de réalisation de l'invention ; et
[Fig. 7] La figure 7 représente schématiquement, sous forme d'un diagramme, les étapes d'un procédé de traitement selon un mode de réalisation de l'invention.

### Description des modes de réalisation

Comme indiqué précédemment, il convient de sécuriser une phase d'enrôlement digitale mis en oeuvre par une carte à puce afin d'éviter toutes utilisations frauduleuses de la carte. A cet effet, l'invention prévoit notamment la réalisation d'une authentification de l'utilisateur préalablement à une phase d'enrôlement digitale (ou du moins préalablement à l'achèvement de cette phase d'enrôlement digitale) de cet utilisateur auprès d'un dispositif tel qu'une carte à puce par exemple.

Or, comme indiqué précédemment, une carte à puce dispose par nature de ressources relativement limitées, notamment en ce qui concerne d'éventuels moyens d'interface utilisateur pour permettre à un utilisateur d'interagir avec la carte. On entend, dans ce document, par « interface utilisateur » tous moyens permettant à un utilisateur d'interagir avec un dispositif tel qu'une carte à puce par exemple. Une interface utilisateur peut comprendre en particulier des moyens d'interface d'entrée (claviers, actionneurs, bouton, microphone, etc.) configurés pour permettre à un utilisateur d'entrer des instructions dans le dispositif en question, et/ou des moyens d'interface de sortie (écran d'affichage, voyants lumineux, haut-parleur, etc.) configurés pour permettre au dispositif en question de sortir (restituer, rendre,...) des informations à un utilisateur.

En particulier, une carte à puce comporte généralement pas ou peu de moyen d'interface d'entrée, ce qui implique des contraintes techniques importantes et pose donc problème pour authentifier de façon fiable et sécurisée un utilisateur de la carte à puce. L'invention propose donc, selon divers modes de réalisation, d'utiliser un capteur d'empreinte digitale dont est équipée une carte à puce (ou plus généralement un dispositif) pour authentifier un utilisateur préalablement à une phase d'enrôlement digitale (ou du moins avant achèvement de cette phase d'enrôlement digitale).

Cependant, l'usage d'un capteur digitale pour authentifier un utilisateur auprès d'une carte à puce, et ce préalablement à la phase d'enrôlement digitale de cet utilisateur (ou du moins préalablement à l'achèvement de cette phase d'enrôlement digitale), présente une difficulté technique dans la mesure où, par définition, la carte à puce ne dispose pas en mémoire d'empreinte digitale de référence pour vérifier si une ou des empreintes digitales capturées par son capteur d'empreinte digitale sont valides.

L'invention propose donc de résoudre ces difficultés techniques notamment en comparant une séquence d'empreintes d'objet, acquises au cours du temps par le capteur d'empreinte digitale préalablement à une phase d'enrôlement digitale (ou du moins avant achèvement de cette phase d'enrôlement digitale), avec des données de référence accessibles par la carte à puce (ces données de référence étant par exemple préenregistrées dans la carte). Plus particulièrement, l'invention prévoit notamment, selon certains modes de réalisation, un procédé de traitement mise en oeuvre par une carte à puce comprenant un capteur d'empreinte digitale, ce procédé comprenant une phase d'authentification à partir d'une séquence d'empreintes d'objet acquises par le capteur d'empreinte digitale de la carte (cette phase d'authentification impliquant une comparaison de cette séquence acquise avec des données de référence), puis le déclenchement d'une phase d'enrôlement digitale sur détection que la phase d'authentification est passée avec succès.

Comme décrit par la suite, le capteur d'empreinte digitale d'une carte à puce de l'invention peut être utilisé pour faire l'acquisition d'empreintes de divers objets, que ce soit des doigts (ou tout autre partie anatomique) ou des outils. Ainsi, un tel capteur peut permettre l'acquisition de divers types d'empreintes d'objet, y compris des empreintes digitales et des empreintes d'outil (empreinte produite par un outil quelconque autre qu'un doigt).

Bien qu'une carte à puce ne dispose pas normalement dans sa mémoire d'empreinte digitale de référence d'un utilisateur légitime avant l'exécution même d'une phase d'enrôlement digitale (dont le but est par nature d'obtenir une ou des empreintes digitales de référence), la carte à puce de l'invention est capable de reconnaître une séquence de plusieurs empreintes d'objet détectées au cours du temps par le capteur d'empreinte digitale et comparer cette séquence acquise avec une séquence de référence de façon à déterminer si une phase d'authentification est réussie ou échoue, et ce avant la phase d'enrôlement digitale (ou du moins avant achèvement de cette phase d'enrôlement). Le recours à des séquences d'empreintes permet d'authentifier un utilisateur au moyen du capteur d'empreinte digitale de la carte à puce alors même que la phase d'enrôlement digitale n'a pas encore est réalisée.

D'autres aspects et avantages de la présente invention ressortiront des exemples de réalisation décrits ci-dessous en référence aux dessins mentionnés ci-avant.

Dans les modes de réalisation décrits ci-après, l'invention est mise en oeuvre par une carte à puce, par exemple une carte bancaire ou carte de paiement, un badge d'accès, une carte d'identité, une carte de vote, etc. L'invention peut toutefois s'appliquer généralement à des dispositifs autres que des cartes à puce, aptes à traiter des transactions (par exemple des transactions de paiement) en coopérant avec un terminal externe.

A noter également que la notion de transaction est entendue dans ce document au sens large et comprend par exemple, dans le domaine bancaire, diverses transactions bancaires, notamment des transactions de paiement, transactions de transfert, etc. L'invention s'applique notamment, mais pas exclusivement, aux cartes de paiement destinée à réaliser des transactions bancaires. On comprendra que d'autres types de transactions ou opérations sont envisageables dans le cadre de l'invention (vote électronique, transaction pour accéder à des données sensibles, transaction pour obtenir un accès physique ou logique ...).

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Sans indications contraires, les termes « premier(s) » (ou première(s)), « deuxième(s) », etc. sont utilisés dans ce document par convention arbitraire pour permettre d'identifier et de distinguer différents éléments (tels que des clés, des dispositifs, etc.) mis en oeuvre dans les modes de réalisation décrits ci-après.

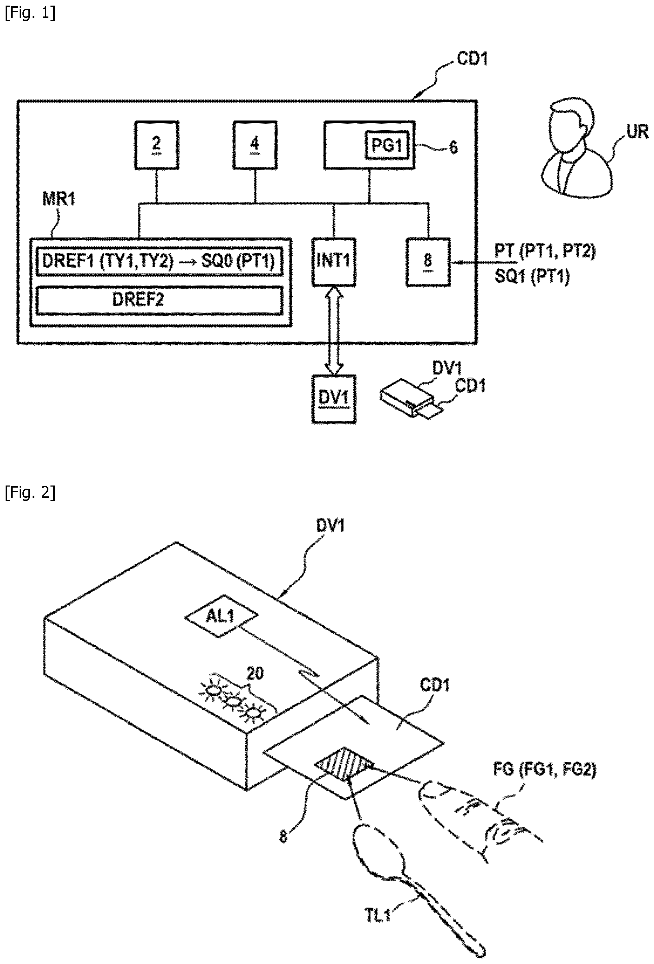

La **figure 1** représente la structure d'une carte à puce CD1 selon un mode de réalisation particulier de l'invention. Dans cet exemple, la carte à puce CD1 comprend un capteur d'empreinte digitale 8 et est configurée pour réaliser une authentification d'un utilisateur UR au moyen du capteur 8 avant l'enrôlement digital de l'utilisateur UR auprès de la carte (ou du moins avant l'achèvement de cet enrôlement digital de l'utilisateur UR auprès de la carte).

La carte à puce CD1 peut être par exemple une carte bancaire ou une carte de paiement, par exemple une carte de type EMV (pour « Europay Mastercard Visa »), bien que d'autres protocoles soient possibles.

Dans cet exemple particulier, la carte à puce CD1 est configurée pour coopérer avec un dispositif périphérique DV1, bien que d'autres exemples soient possibles sans l'intervention d'un tel dispositif périphérique.

Plus précisément, la carte à puce CD1 comprend dans cet exemple un processeur 2, une mémoire volatile 4 (RAM), une mémoire non volatile 6, une mémoire non volatile réinscriptible MR1, le capteur d'empreinte digitale 8, et éventuellement une interface de communication INT1.

On suppose par exemple que la carte à puce ne comprend aucune interface utilisateur (ou du moins aucun moyen d'interface utilisateur en entrée) mis à part le capteur d'empreinte digitale 8. Des variantes sont toutefois possibles dans lesquelles la carte à puce CD1 comprend en outre une interface utilisateur en plus du capteur d'empreinte digitale 8, comprenant par exemple au moins l'un parmi un ou des voyants lumineux, un écran, un ou des boutons, etc.

On suppose également dans cet exemple que la carte à puce CD1 est dépourvue de source d'alimentation électrique interne. Dans cet exemple, la carte à puce CD1 est configurée pour être alimentée électriquement par le dispositif périphérique DV1 lorsque la carte CD1 et le dispositif périphérique DV1 sont couplés ensemble (comme décrit ci-après).

La mémoire 6 est une mémoire non volatile réinscriptible ou une mémoire morte (ROM), cette mémoire constituant un support d'enregistrement (ou support d'informations) conforme à un mode de réalisation particulier, lisible par la carte à puce CD1, et sur lequel est enregistré un programme d'ordinateur PG1 conforme à un mode de réalisation particulier. Ce programme d'ordinateur PG1 comporte des instructions pour l'exécution des étapes d'un procédé de traitement selon des modes de réalisation particuliers, comme décrit plus en détail ultérieurement.

La mémoire non volatiles réinscriptible MR1 (par exemple de type Flash) est apte à stocker notamment des premières données de référence DREF1 et des deuxièmes données de référence DREF2. Comme décrit par la suite, les premières données de référence DREF1 sont préenregistrées dans la carte à puce CD1 et sont utilisées par la carte à puce CD1 lors d'une phase d'authentification préalable (ou parallèle, ou concomitante) à une phase d'enrôlement digitale pour authentifier un utilisateur UR à partir d'une séquence d'empreintes d'objet PT acquises par le capteur d'empreinte digitale 8. Ces premières données de référence DREF1 peuvent définir par exemple une séquence de référence d'au moins deux types d'empreinte différents notés TY1 et TY2 **(****figure 1****).** Les deuxièmes données de référence DREF2 sont des données d'enrôlement digital qui peuvent être générées par le carte à puce CD1 lors d'une phase d'enrôlement postérieure à la phase d'authentification susmentionnée. La nature et l'usage des données de référence DREF1 et DREF2 apparaîtront plus précisément dans les exemples particuliers qui suivent.

Le capteur d'empreinte digitale 8 est configuré pour faire l'acquisition (capturer) d'empreintes digitales, et plus généralement d'empreintes d'objet PT. Il peut notamment s'agir d'empreintes d'objet PT1 acquises lors d'une phase d'authentification préalable (ou parallèle, ou concomitante) à une phase d'enrôlement digitale ou des empreintes d'objet PT2 acquises lors d'une phase d'enrôlement digitale postérieure à ladite phase d'authentification. Comme décrit par la suite, le capteur d'empreinte digitale 8 peut en particulier être utilisé pour acquérir une séquence SQ1 d'empreintes d'objet PT1 lors d'une phase d'authentification préalable (ou parallèle, ou concomitante) à une phase d'enrôlement digital.

Divers objets peuvent être présentés en contact ou à proximité du capteur 8 pour permettre à ce dernier d'acquérir une empreinte correspondante. Comme déjà indiqué, la nature des objets considérés peut varier selon le cas. Par définition, le capteur d'empreinte digitale 8 est configuré pour acquérir au moins des empreintes digitales produites à partir de doigts. Selon certains exemples de réalisation, le capteur d'empreinte digitale 8 peut en outre être configuré pour acquérir des empreintes d'objet autres que des empreintes digitales, notamment des empreintes d'outil produites à partir d'outils autres que des doigts (ou autres que des parties anatomiques). Le capteur d'empreinte digitale 8 peut par exemple être configuré pour acquérir des empreintes - dites empreintes d'outil - d'un ou de plusieurs outils de diverses natures, tels que des cuillères, stylets, ou tout autre outil approprié susceptible d'être manipulé par un utilisateur UR pour interagir avec le capteur d'empreinte digitale 8.

Le capteur d'empreinte digitale 8 peut en particulier être configuré pour déterminer si une empreinte d'objet PT1 acquise constitue une empreinte digitale ou une empreinte d'outil en fonction de l'identification ou non de minuties dans ladite empreinte. Selon un exemple particulier, la présence de minuties dans une empreinte indique qu'il s'agit d'une empreinte digitale et, a contrario, l'absence de minutie indique qu'il s'agit d'une empreinte d'outil.

Dans le présent document, des minuties sont des éléments particuliers (points singuliers locaux, points d'irrégularité, etc.) caractérisant la surface d'un doigt, par exemples des caractéristiques de lignes papillaires (terminaisons, bifurcations, îlots, etc.). La nature et le nombre des minuties considérées pour un doigt donné peuvent varier selon le cas.

De façon générale, le capteur d'empreinte digitale 8 peut être configuré par exemple pour acquérir au moins deux types différents - notés TY1 et TY2 - d'empreinte d'objet. Chacun de ces types TY1 et TY2 peut correspondre par exemple à une quelconque empreinte digitale (c.-à-d. à une empreinte digitale caractérisant un quelconque doigt), à une empreinte digitale donnée (caractérisée par des minuties prédéfinies d'un doigt donné), une empreinte d'un quelconque outil autre qu'un doigt (dépourvu de minutie caractérisant la surface d'un doigt), d'un outil particulier (présentant des caractéristiques prédéfinies), etc. Des exemples d'implémentation illustrant la diversité des types d'empreinte pouvant être détectés par le capteur d'empreinte digitale 8 et utilisé lors du procédé de traitement sont décrits ultérieurement.

La manière dont le capteur d'empreinte digitale 8 réalise l'acquisition d'une empreinte d'objet à partir d'un objet correspondant peut varier selon la technologie employée par le capteur considéré. Les spécificités du capteur 8 utilisé peuvent ainsi varier selon les choix d'implémentations de l'homme du métier. Le capteur d'empreinte digitale 8 peut notamment être un capteur capacitif, un capteur optique, un capteur thermique, etc. et plus généralement un quelconque capteur apte à faire l'acquisition d'empreintes d'objet, y compris l'acquisition d'empreintes digitales.

Dans le cas où le capteur d'empreinte digitale 8 est configuré pour faire l'acquisition d'empreintes d'outil à partir d'un outil (autre qu'un doigt), la nature de cet outil peut varier selon la technologie du capteur. En particulier, le capteur 8 peut être configuré pour faire l'acquisition d'empreintes d'outil produites par des outils électriquement conducteurs, ou éventuellement par des outils non électriquement conducteurs selon le cas.

Comme décrit par la suite, le capteur d'empreinte digitale 8 peut dans certains exemples être configuré pour acquérir simultanément une pluralité d'empreintes d'objet PT. Pour ce faire, un utilisateur peut alors présenter dans la zone de détection du capteur 8 (en contact ou à proximité du capteur 8) plusieurs objets (doigts et/ou outils) simultanément, chacun de ces objets causant l'acquisition de multiples empreintes.

Dans cet exemple, le processeur 2 utilise la mémoire volatile 4 pour réaliser les différentes opérations et fonctions nécessaires au fonctionnement de la carte à puce CD1, y compris pour exécuter le programme d'ordinateur PG1 lors de la mise en œuvre du procédé de traitement de l'invention.

La carte à puce CD1 peut être configurée pour réaliser une fonction donnée en coopérant avec un terminal externe (non représenté), par exemple pour réaliser une transaction, telle qu'une transaction bancaire (transaction de paiement, etc.) ou tout autre type de transaction. La carte à puce CD1 peut notamment être une carte à puce EMV configurée pour réaliser des transactions EMV.

Selon un exemple particulier représenté en **figure 2****,** le dispositif périphérique DV1 avec lequel peut se coupler la carte à puce CD1 est un étui dans lequel la carte CD1 peut s'insérer ou s'engager. D'autres formes du dispositif périphérique DV1 sont toutefois possibles. L'étui DV1 comprend dans cet exemple une source d'alimentation interne AL1 adaptée pour alimenter électriquement la carte à puce CD1 lorsque les deux éléments sont couplés ensemble. Dans cet exemple, le couplage est donc réalisée par contact, bien que d'autres implémentations soient possibles tels qu'un couplage sans contact de sorte que l'alimentation électrique est fournie en sans contact (par exemple par induction) depuis le dispositif périphérique DV1 à la carte à puce CD1.

Le dispositif périphérique DV1 peut éventuellement aussi comprendre une interface utilisateur 20 pour guider l'utilisateur lors de l'exécution du procédé de traitement par la carte à puce CD1. Cette interface utilisateur 20 peut être relativement limitée et comprendre par exemple un ou des voyants lumineux, d'autres implémentations étant possibles sans que le dispositif périphérique DV1 ne dispose d'une telle interface utilisateur 20.

Comme représenté en **figure 2****,** la carte à puce CD1 alimentée électriquement par le dispositif périphérique DV1 (par la source d'alimentation AL1) est configurée pour acquérir des empreintes d'objet PT au moyen de son capteur d'empreinte digitale 8. Comme déjà indiqué, la nature des objets dont les empreintes sont acquises peut varier selon le cas. Dans cet exemple, le capteur 8 permet par exemple de capturer des empreintes digitales PT correspondant à des doigts FG (par un exemple des empreintes correspond à au moins deux doigts différents notés FG1 et FG2) et éventuellement des empreintes d'objet PT correspondant à un ou des outils, tel que l'outil TL1 (une cuillère dans cet exemple).

Des variantes de réalisation sont toutefois possibles dans lesquelles la carte à puce CD1 comprend une source d'alimentation interne lui permettant de s'auto-alimenter électriquement, de sorte que le recours d'un dispositif périphérique DV1 n'est pas nécessaire.

On comprendra que certains éléments généralement présents dans une carte à puce ont été volontairement omis car ils ne sont pas nécessaires à la compréhension de la présente invention. En outre, il importe de noter que la carte à puce CD1 ne constitue qu'un exemple non limitatif de réalisation de l'invention. L'homme du métier comprend en particulier que certains éléments de la carte à puce CD1 ne sont décrits ici que pour faciliter la compréhension de l'invention, des variantes étant possibles sans ces éléments.

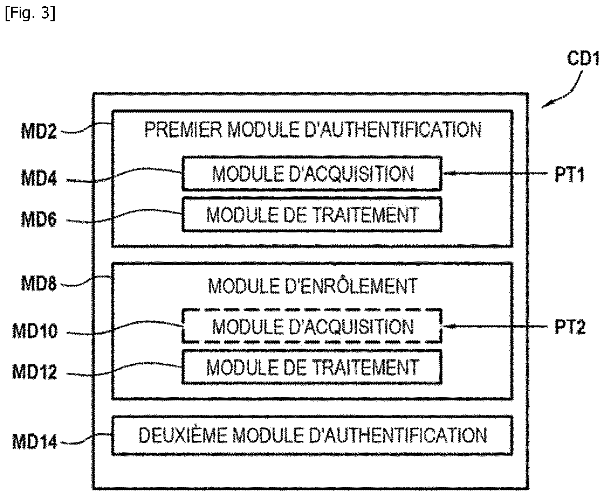

La **figure 3** représente selon un mode de réalisation particulier des modules mis en oeuvre par le processeur 2 lorsque ce dernier exécute le programme d'ordinateur PG1, à savoir les modules suivants : un premier module d'authentification MD2, un module d'enrôlement MD8 et éventuellement un deuxième module d'authentification MD14.

Plus précisément, le premier module d'authentification MD2 est configuré pour réaliser une phase d'authentification. Comme décrit par la suite, cette phase d'authentification peut être déclenchée avant une, ou en parallèle d'une, phase d'enrôlement. Pour ce faire, le premier module d'authentification MD2 peut comprendre dans cet exemple un premier module d'acquisition MD4 et un premier module de traitement MD6.

Le premier module d'acquisition MD4 est configuré pour acquérir une séquence SQ1 d'empreintes d'objet PT1 à partir d'objets détectés au cours du temps par le capteur d'empreinte digitale 8 de la carte à puce CD1. La notion de séquence d'empreinte d'objet est décrite plus en détail ultérieurement.

Le premier module de traitement MD6 est configuré pour comparer la séquence SQ1 d'empreintes d'objet PT1, acquise par le premier module d'acquisition MD4, avec des données de référence DREF1 préenregistrées dans la carte à puce CD1. Comme déjà indiqué, ces données de référence DREF1 peuvent par exemple définir une séquence de référence SQ0 d'empreintes de référence selon au moins deux types d'empreinte différents notés TY1, TY2. Le premier module de traitement MD6 est en outre configuré pour déterminer que la phase d'authentification est réussie si la séquence SQ1 d'empreintes d'objet PT1 coïncide avec les (ou est conforme aux) données de référence DREF1.

Le module d'enrôlement MD8 est en outre configuré pour réaliser une phase d'enrôlement digitale, cette dernière pouvant être postérieure à la phase d'authentification réalisée par le premier module d'authentification MD2 ou éventuellement réalisée en parallèle de (de façon concomitante à) ladite phase d'authentification. Pour ce faire, le module d'enrôlement MD8 peut comprendre dans cet exemple un deuxième module de traitement MD12, et éventuellement aussi un deuxième module d'acquisition MD10.

Le deuxième module de traitement MD12 est configuré pour générer, à partir d'au moins une empreinte digitale d'enrôlement PT2, des données d'enrôlement digital DREF2, c'est-à-dire des données servant de modèle d'empreintes digitales d'un utilisateur autorisé à utiliser la carte à puce CD1.

Par définition, une empreinte digitale au sens de ce document correspond à l'empreinte d'un doigt (et non d'un outil), qui est ou doit être détectée par le capteur 8 d'empreinte digitale.

Le deuxième module de traitement MD12 peut en outre être configuré pour enregistrer les données d'enrôlement digital DREF2, par exemple dans la mémoire MR1 de la carte à puce CD1, de sorte à permettre une authentification digitale ultérieure par la carte à puce CD1 à partir des données d'enrôlement digital DREF2.

Comme décrit par la suite, la ou les empreintes digitales d'enrôlement PT2 utilisées par le deuxième module de traitement MD12 pour générer les données d'enrôlement digital DREF2 peut comprendre au moins une empreinte digitale acquise par le module d'enrôlement MD8 indépendamment de la phase d'authentification réalisée par le premier module d'authentification MD2. Pour ce faire, le module d'enrôlement MD8 peut comprendre en outre le deuxième module d'acquisition MD10 mentionné ci-avant, ce dernier étant configuré pour acquérir, en utilisant le capteur d'empreinte digitale 8, au moins une empreinte digitale PT2 en tant qu'empreinte digitale d'enrôlement.

Selon un exemple particulier, le deuxième module d'authentification MD14 est en outre configuré pour réaliser une authentification digitale d'un utilisateur en comparant au moins une empreinte digitale acquise par le capteur d'empreinte digitale 8 (après la phase d'authentification réalisée par le premier module d'authentification MD2) avec les données d'enrôlement digital DREF2, consultable dans cet exemple par la carte à puce CD1 dans sa mémoire MR1.

Comme indiqué ci-avant, la carte à puce CD1 est configurée pour authentifier un utilisateur UR **(****figure 1****),** avant (ou éventuellement en parallèle de) la réalisation d'une phase d'enrôlement digitale de cet utilisateur UR, à partir d'une séquence SQ1 d'empreintes d'objet PT1 acquises par le capteur d'empreinte digitale 8. Pour que cette phase d'authentification passe avec succès, il faut que cette séquence SQ1 coïncide (concorde) avec la séquence de référence SQ0 définie par les données de référence DREF1 préenregistrées dans la carte à puce CD1.

De manière générale, la séquence de référence SQ0 définie par les données de référence DREF1 est composée d'une pluralité d'empreintes d'objet PT1 à réaliser au cours du temps selon un ordre prédéfini, un type d'empreinte respectif (à savoir TY1 ou TY2 dans les exemples qui suivent) étant attribué à chacune des empreintes d'objet de la séquence de référence SQ0. Autrement dit, selon les données de référence DREF1, chaque empreinte d'objet de la séquence de référence SQ0 est d'un type d'empreinte respectif. Cette séquence de référence SQ0 implique que toutes les empreintes d'objet PT1 qui la composent ne sont pas acquises simultanément mais, au contraire, que cette séquence comprend au moins deux empreintes d'objet PT1 acquises l'une après l'autre dans le temps selon un ordre prédéfini.

La nature de la séquence de référence SQ0 qu'il est nécessaire pour un utilisateur UR de réaliser avec le capteur d'empreinte digitale 8 pour s'authentifier peut varier selon le cas, certains exemples d'implémentation étant décrits ci-après. En particulier, le type des empreintes d'objet PT1 (en particulier la nature de ces types et le nombre de types différents) ou encore l'arrangement dans le temps des empreintes d'objet PT1 dans la séquence de référence SQ0 peuvent varier selon l'implémentation souhaitée.

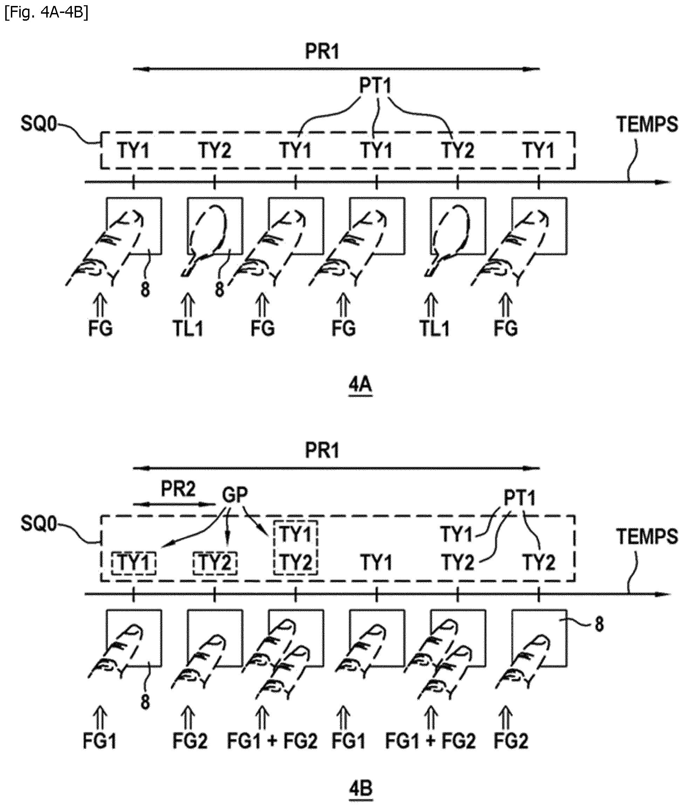

La **figure 4A** représente selon un exemple particulier une séquence de référence SQ0 que doit respecter la séquence SQ1 d'empreintes d'objet PT1 réalisée par un utilisateur UR au cours d'une période de temps PR1 lors d'une phase d'authentification préalable à une phase d'enrôlement (ou du moins préalable à l'achèvement de cette phase d'enrôlement), cette séquence SQ0 comprenant des empreintes d'objet PT1 selon deux types d'empreinte différents TY1 et TY2. On suppose ici par exemple que le premier type d'empreinte TY1 correspond à une quelconque empreinte digitale FG (correspondant à un quelconque doigt) tandis que le deuxième type d'empreinte TY2 correspond à un quelconque outil TL1 (dépourvu de minutie caractérisant la surface d'un doigt). A titre d'exemple, cette séquence de référence SQ0 se compose d'empreintes d'objet PT1 selon respectivement les types suivants au cours du temps : TY1-TY2-TY1-TY1-TY2-TY1. Dans cet exemple, les empreintes d'objets PT1 doivent être détectées successivement, l'une après l'autre, au cours de la période de temps PR1. Ainsi, pour s'authentifier avec succès, un utilisateur UR doit par exemple présenter un doigt quelconque, puis un outil sans minutie, puis deux fois successivement un doigt quelconque, puis un outil sans minutie puis à nouveau un doigt quelconque.

A noter qu'au stade de la phase d'authentification préalable à la phase d'enrôlement digitale (ou du moins préalable à l'achèvement de la phase d'enrôlement digitale), la carte à puce CD1 ne dispose pas en mémoire de modèle des empreintes digitales du titulaire de la carte mais peut par exemple être capable de reconnaître si une empreinte d'objet PT1 correspond à un doigt (premier type TY1) ou à un outil (deuxième type TY2), en fonction par exemple de la détection ou non de minuties dans chaque empreinte acquise.

Dans certains modes de réalisation, la séquence de référence SQ0 à respecter lors d'une phase d'authentification préalable (ou parallèle) à une phase d'enrôlement comprend au moins deux groupes GP d'empreinte acquis séquentiellement au cours d'une période de temps PR1, chaque groupe GP d'empreinte comprenant au moins une empreinte d'objet PT1 acquise simultanément par le capteur d'empreinte digitale 8.

La **figure 4B** représente selon un exemple particulier une séquence de référence SQ0 que doit respecter la séquence SQ1 d'empreintes d'objet PT1 réalisée par un utilisateur UR au cours d'une période de temps PR1 lors d'une phase d'authentification préalable à une phase d'enrôlement (ou du moins préalable à l'achèvement de cette phase d'enrôlement), cette séquence SQ0 comprenant des empreintes d'objet PT1 selon deux types d'empreinte différents TY1 et TY2. On suppose dans cet exemple que le premier type TY1 d'empreinte correspond à une empreinte digitale correspondant à un premier doigt quelconque (c.-à-d. une empreinte digitale caractérisée par des premières minuties d'un premier doigt quelconque) et que le deuxième type T2 d'empreinte correspond à une empreinte digitale correspondant à un deuxième doigt quelconque différent du premier doigt (c.-à-d. une empreinte digitale caractérisée par des deuxièmes minuties d'un deuxième doigt quelconque). Dans ce cas, l'usage d'un outil TL1 n'est pas nécessaire pour permettre à l'utilisateur UR de s'authentifier au moyen du capteur d'empreinte digitale 8, bien que des variantes sont possibles dans lesquelles la séquence de référence SQ0 comprend des empreintes digitales selon au moins deux types d'empreinte différents (dits premier et deuxième types d'empreinte) ainsi qu'au moins une empreinte d'outil selon un troisième type d'empreinte.

Comme décrit plus en détail par la suite, la séquence de référence SQ0 telle que représentée en **figure 4B** ne définit pas quels doigts particuliers (ou quelles minuties) il faut détecter pour authentifier un utilisateur UR, mais définit plus généralement une alternance donnée de types d'empreintes digitales correspondant à plusieurs doigts distincts, ces doigts pouvant être quelconques dans la mesure où l'alternance de types d'empreinte telle que définie par la séquence de référence SQ0 est respectée.

Toujours dans l'exemple de la **figure 4B****,** la séquence de référence SQ0 à respecter lors de la phase d'authentification, préalable à (ou en parallèle de, ou concomitante à) la phase d'enrôlement, peut comprendre des groupes GP d'empreinte acquis séquentiellement par le capteur d'empreinte digitale 8 au cours d'une période de temps PR1, chaque groupe GP d'empreinte comprenant soit une empreinte digitale selon un type d'empreinte parmi TY1 et TY2, soit deux empreintes selon les types d'empreintes TY1 et TY2 qui sont détectés simultanément. En variante, les groupes GP peuvent comprendre plus de deux empreintes digitales acquises simultanément par le capteur d'empreinte digitale 8. Pour ce faire, le capteur d'empreinte digitale 8 peut être configuré pour permettre la capture simultanée de deux empreintes digitales (ou plus) en positionnant côte à côte deux doigts (ou plus) sur le (ou dans la zone de détection du) capteur d'empreinte digitale 8.

A titre d'exemple, la séquence de référence SQ0 illustrée en **figure 4B** se compose d'empreintes d'objet PT1 des types suivants au cours du temps : TY1-TY2-[TY1, TY2]-TY1-[TY1, TY2]-TY2, où la mention [TY1,TY2] indique que le capteur d'empreinte digitale 8 capture simultanément une première empreinte d'objet PT1 selon le premier type TY1 et une deuxième empreinte d'objet PT1 selon le deuxième type TY2. Ainsi, pour s'authentifier avec succès, un utilisateur UR doit par exemple présenter un premier doigt FG1 quelconque, puis un deuxième doigt FG2 quelconque (différent du premier doigt), puis les premier et deuxième doigts FG1, FG2 simultanément, puis le premier doigt FG1, puis à nouveau les premier et deuxième doigts FG1, FG2 simultanément, puis le deuxième doigt FG2.

Comme déjà indiqué, au stade de la phase d'authentification réalisée préalablement à (ou en parallèle de, ou de façon concomitante à) la phase d'enrôlement digitale, la carte à puce CD1 ne dispose pas en mémoire de modèle des empreintes digitales du titulaire de la carte mais peut par exemple être configurée pour reconnaître si chaque empreinte d'objet PT1 acquise dans le cadre de la séquence SQ1 est une empreinte digitale ou une empreinte d'outil en fonction de la présence ou non de minuties dans l'empreinte, ou peut être configurée pour reconnaître que plusieurs empreintes digitales PT1 acquises correspondent à un même doigt (en fonction des minuties caractérisant ces empreintes). La carte à puce peut ainsi détecter une alternance de types d'empreinte définie par la séquence SQ1 d'empreintes d'objet PT1.

L'utilisateur UR de la carte à puce CD1 **(****figure 1****)** peut ainsi réaliser diverses combinaisons d'empreintes d'objet (avec un ou des doigts et/ avec un ou des outils) selon une séquence SQ1 d'empreintes au cours du temps de sorte à s'authentifier auprès de la carte à puce CD1, et ce sans que la carte à puce CD1 ne dispose à ce stade dans sa mémoire de modèles d'empreinte digitale du titulaire de la carte. Sont à présent décrits ci-après des exemples de réalisation du procédé de traitement de l'invention permettant à la carte à puce CD1 d'authentifier un utilisateur UR, avant l'enrôlement digital de cet utilisateur UR (ou du moins avant achèvement de l'enrôlement digital de cet utilisateur UR), en utilisant son capteur d'empreinte digitale 8

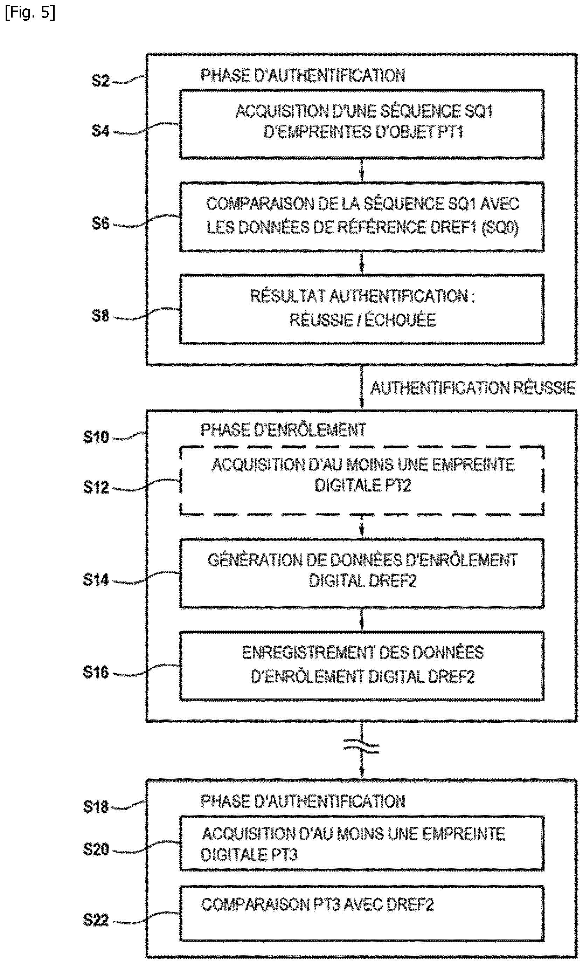

Un mode de réalisation de l'invention est décrit ci-après en référence à la **figure 5****.** Plus précisément, la carte à puce CD1 telle que décrite précédemment en référence aux **figures 1-4** met en œuvre le procédé de traitement de l'invention selon un exemple particulier en exécutant le programme PG1.

On suppose qu'un utilisateur UR souhaite personnaliser la carte à puce CD1 en réalisant un enrôlement digital auprès de cette carte afin d'y stocker un ou des modèles d'empreinte digitale qui serviront de données de référence pour authentifier ultérieurement cet utilisateur UR. Pour ce faire, la carte à puce CD1 est couplée dans cet exemple avec le dispositif périphérique DV1 de façon à ce que ce dernier alimente électriquement la carte à puce CD1, bien que d'autres exemples sans un tel dispositif périphérique DV1 soient possibles.

On considère en premier lieu que la carte à puce CD1 se trouve dans un état initial dans lequel la carte comprend en mémoire les données de référence DREF1 mais n'a pas encore réalisé de phase d'enrôlement de l'utilisateur UR. Autrement dit, la carte à puce CD1 ne dispose pas dans sa mémoire de modèle d'empreinte digitale de l'utilisateur UR. La carte à puce CD1 exécute ainsi le procédé de traitement selon un exemple particulier pour enrôler de façon sécurisée au moins une empreinte digitale de l'utilisateur UR.

Comme représenté en **figure 5****,** au cours d'une phase d'authentification S2 (préalable à une phase d'enrôlement digital S10, ou du moins à l'achèvement de cette phase d'enrôlement digitale S10), la carte à puce CD1 vérifie l'authenticité de l'utilisateur UR à partir d'empreintes d'objet PT1 acquises par son capteur d'empreinte digitale 8. Pour ce faire, la phase S2 d'authentification comprend les étapes S4, S6 et S8 décrites ci-après.

Lors d'une étape S4 d'acquisition, la carte à puce CD1 fait l'acquisition d'une séquence SQ1 d'empreintes d'objet PT1 à partir d'objets détectés au cours du temps par le capteur d'empreinte digitale 8. On considère à titre d'exemple que l'acquisition S4 de la séquence SQ1 se fait au cours d'une période de temps PR1, qui peut varier selon le cas et être adaptée par l'homme du métier.

Comme déjà décrit, les types des empreintes d'objet PT1 acquises en S4 dans la séquence SQ1 peuvent varier selon le cas et dépendent en particulier de la nature de l'objet utilisé pour générer chaque empreinte. L'utilisateur UR peut notamment présenter successivement, l'un après l'autre ou par groupe de deux ou plus, des objets (un ou des doigts et/ou un ou des outils) dans la zone de détection du capteur d'empreinte digitale 8. Pour ce faire, on suppose à titre d'exemple que l'utilisateur UR pose chaque objet en contact sur le capteur d'empreinte digitale 8, bien que des variantes soient possibles où des empreintes d'objet sont acquises sans qu'un contact des objets avec le capteur 8 ne soit nécessaire.

Comme décrit notamment en référence aux **figures 4A-4B****,** la séquence SQ1 peut comprendre une pluralité de types différents d'empreinte d'objet (par exemple au moins deux types différents). En outre, la séquence SQ1 peut se décomposer en plusieurs étapes d'acquisition successives, de sorte qu'une ou plusieurs empreintes d'objets sont acquises par le capteur d'empreinte digitale 8 à chacune de ces étapes d'acquisition. Dans le cas d'une acquisition multiple d'empreintes, toutes les empreintes sont acquises simultanément lors de l'étape d'acquisition considérée. Selon un exemple particulier, la séquence SQ1 d'empreintes d'objet acquise en S4 comprend ainsi au moins deux groupes d'empreinte acquis séquentiellement au cours du temps (lors d'étapes d'acquisition successives), chaque groupe d'empreinte comprenant au moins une empreinte d'objet acquise simultanément par le capteur d'empreinte digitale 8.

Au cours d'une étape S6 de comparaison, la carte à puce CD1 compare la séquence SQ1 d'empreintes d'objet PT1 acquise en S4 avec les données de référence DREF1. Dans cet exemple, les données de référence DREF1 sont préenregistrées dans la carte à puce CD1. Pour ce faire, le procédé peut comprendre, avant la phase S2 d'authentification (ou tout du moins avant l'étape S6 de comparaison), une étape préliminaire (non représentée) d'enregistrement des données de référence DREF1, à savoir dans la mémoire MR1 de la carte à puce CD1 dans cet exemple.

Au cours d'une étape S8 d'analyse, la carte à puce CD1 détermine que la phase S2 d'authentification est passée avec succès si la séquence d'empreinte SQ1 coïncide (concorde) avec la séquence de référence SQ0 définie par les données de référence DREF1. Autrement dit, l'utilisateur UR est authentifié avec succès si la séquence d'empreintes SQ1 est conforme aux données de référence DREF1. Si en revanche la séquence SQ1 ne concorde pas avec la séquence de référence SQ0, la phase d'authentification S2 est considérée comme ayant échoué.

On considère par exemple que les données de référence DREF1 définissent une séquence de référence SQ0 d'empreintes d'objet selon au moins deux types d'empreinte différents TY1, TY2. Autrement dit, la séquence de référence SQ0 forme une série d'empreintes d'objet comprenant des empreintes d'objet d'au moins deux types TY1, TY2 différents. On suppose par simplicité que la séquence de référence SQ0 ne comprend ici que ces deux types différents TY1, TY2, bien que d'autres implémentations sont possibles avec plus de deux types d'empreinte différents.

Lors de la phase S2 d'authentification, la carte à puce CD1 ne dispose pas encore en mémoire de modèle d'empreinte digitale servant de données de référence pour authentifier le titulaire de la carte. Comme décrit ci-avant, les données de référence DREF1 définissent une séquence de référence SQ0 formée d'une pluralité d'empreintes d'objet PT1 à réaliser au cours du temps selon un ordre prédéfini, un type d'empreinte respectif (à savoir TY1 ou TY2 dans cet exemple) étant attribué à chacune des empreintes d'objet de la séquence de référence SQ0. Aussi, lors de l'étape S6 de comparaison, la carte à puce CD1 ne connaît pas les véritables empreintes digitales du titulaire de la carte mais vérifie que la séquence SQ1 d'empreintes d'objet acquise en S4 respecte une alternance (ou variation) de types d'empreinte telle que définie dans la séquence de référence SQ0.

Selon un exemple particulier, lors de l'étape S6 de comparaison, la carte à puce CD1 vérifie que :
- les séquences SQ0 et SQ1 comportent le même nombre d'empreintes d'objet PT1 ; et
- les empreintes d'objet PT1 composant la séquence SQ1 acquise respecte l'alternance de type d'empreinte telle que définie par la séquence de référence SQ0.

Si ces vérifications sont passées avec succès, la carte à puce CD1 détecte en S8 que la phase S2 d'authentification est réussie.

Selon par exemple le cas représenté en **figure 4A****,** la séquence de référence SQ0 définit des empreintes d'objet selon deux types d'empreinte TY1, TY2 correspondant respectivement à une quelconque empreinte digitale et à une quelconque empreinte d'outil.

Dans ce cas, la carte à puce CD1 vérifie en S6 que la séquence SQ1 acquise comprend 6 empreintes d'objet PT1 successives et que ces empreintes correspondent successivement à une quelconque empreinte digitale FG, une quelconque empreinte d'outil TL1, deux fois successivement une quelconque empreinte digitale FG, une quelconque empreinte d'outil TL1 et une quelconque empreinte digitale FG (FG-TL1-FG-FG-TL1-FG). Pour ce faire, la carte à puce CD1 peut enregistrer temporairement (par exemple dans sa RAM 4) les empreintes d'objet PT1 acquises en S4 de sorte à pouvoir déterminer leurs types et vérifier qu'ils respectent la séquence de référence SQ0. Comme décrit ci-après, la carte à puce CD1 peut vérifier pour chaque empreinte d'objet PT1 acquise si elle comprend des minuties caractérisant une empreinte digitale et, dans l'affirmative, déterminer que ladite empreinte constitue une empreinte digitale (sinon il s'agit d'une empreinte d'outil).

Selon par exemple le cas représenté en **figure 4B****,** la séquence de référence SQ0 définit des empreintes d'objet selon deux types d'empreinte TY1, TY2 correspondant respectivement à des empreintes digitales correspondant à un premier doigt donné et à un deuxième doigt donné différent du premier doigt. Dans ce cas, la carte à puce CD1 vérifie en S6 que la séquence SQ1 acquise comprend 6 groupes successifs d'au moins une empreinte digitale conformément à la séquence de référence SQ0 illustrée en **figure 4B****.** Pour ce faire, la carte à puce CD1 peut enregistrer temporairement (par exemple dans sa RAM 4) les empreintes d'objet PT1 acquises en S4 de sorte à vérifier que ces empreintes PT1 sont des empreintes digitales et reconnaître les empreintes digitales correspondant à un même doigt et donc appartenant à un même type dans la séquence SQ1 (TY1 ou TY2 dans cet exemple). Comme décrit ci-après, la carte à puce CD1 ne dispose pas en mémoire de modèles d'empreinte des doigts du titulaire de la carte mais peut analyser les minuties présentes dans chaque empreinte d'objet PT1 acquise et, à partir de ces minuties, déterminer les empreintes digitales correspondant à un même doigt et donc à un même type.

En particulier, la carte à puce CD1 peut vérifier que les empreintes d'objet PT1 acquises en S4 dans la séquence SQ1 sont bien des empreintes digitales à partir d'une détection des minuties caractérisant chaque empreinte. Sur détection de minuties caractéristiques d'un doigt, la carte à puce CD1 détermine qu'une empreinte d'objet PT1 constitue une empreinte digitale. Comme décrit par la suite, la carte à puce CD1 peut en outre comparer entre elles les empreintes digitales PT1 de la séquence SQ1 pour identifier les empreintes correspondant à un même doigt et donc à un même type d'empreinte (TY1 ou TY2 dans cet exemple).

Toujours en référence à la **figure 5****,** la carte à puce CD1 déclenche en outre une phase S10 d'enrôlement digital comprenant les étapes S14 et S16 décrites ci-après. Comme décrit ci-après, des variantes sont possibles dans lesquelles la phase S10 d'enrôlement comprend en outre une étape S12 d'acquisition.

A titre d'exemple, on considère ici que la carte à puce CD1 déclenche la phase S10 d'enrôlement digital en réponse à la détermination en S8 que la phase S2 d'authentification est réussie. L'utilisateur UR étant authentifié avec succès, il est considéré comme le titulaire de la carte et cette phase S10 d'enrôlement permet donc de réaliser un enrôlement digital du titulaire UR. Il est ainsi possible de sécuriser le processus d'enrôlement digital de l'utilisateur UR auprès de la carte à puce CD1. Comme décrit ultérieurement, des variantes sont toutefois possibles dans lesquelles la phase S10 d'enrôlement est déclenchée avant achèvement de la phase S2 d'authentification, et donc avant que la carte à puce CD1 ne détermine en S8 que la phase S2 d'authentification est réussie. La phase S10 d'enrôlement peut ainsi également être réalisée en parallèle de (de façon concomitante à) la phase S2.

Ainsi, au cours d'une étape S14 de génération, la carte à puce CD1 génère, à partir d'au moins une empreintes digital PT2, dite empreinte digitale d'enrôlement, des données d'enrôlement digital DREF2 qu'elle enregistre (S16) de sorte à permettre une authentification digitale ultérieure à partir de ces données d'enrôlement digital PT2. Une telle authentification digitale ultérieure ne sera possible que si le résultat en S8 de l'authentification est passé avec succès. Comme déjà indiqué, les données d'enrôlement digital DREF2 sont enregistrées par exemple dans la mémoire MR1 de la carte.

On suppose par la suite à titre d'exemple que la carte à puce CD1 génère les données d'enrôlement digital DREF2 à partir d'une pluralité d'empreintes digital d'enrôlement PT2. Ces empreintes digitales d'enrôlement PT2 peuvent être obtenues de diverses manières par la carte à puce CD1 comme décrit ci-après. Les données d'enrôlement digital DREF2 sont par exemple générées en agrégeant les empreintes digitales d'enrôlement PT2 (ou des données caractéristiques de ces empreintes). Divers traitements peuvent être réalisés par la carte à puce CD1 pour obtenir les données d'enrôlement digital DREF2 à partir des empreintes digitales d'enrôlement PT2.

Selon un exemple particulier, au moins une empreinte d'enrôlement digital PT2, à partir de laquelle sont générées en S14 les données d'enrôlement digital DREF2, est une empreinte digitale PT1 acquise en S4 parmi la séquence SQ1 d'empreintes d'objet. Autrement dit, la carte à puce CD1 utilise, en tant qu'empreinte digitale d'enrôlement PT2, au moins une empreinte d'objet PT1 (plus précisément une empreinte digitale) acquise en S4 lors de la phase S2 d'authentification pour générer en S14 les données d'enrôlement digital DREF2. Il est ainsi possible d'accélérer le processus d'enrôlement digital tout en assurant un bon niveau de sécurité dans la mesure où une même empreinte digitale acquise par le capteur d'empreinte digitale 8 peut servir à la fois pour authentifier l'utilisateur UR lors de la phase S2 d'authentification et pour enrôler des empreintes digitales de l'utilisateur UR.

Selon un exemple particulier, chaque empreinte digitale d'enrôlement PT2 utilisé en S14 pour générer les données d'enrôlement digital DREF2 est une empreinte digitale PT1 de la séquence SQ1 d'empreintes d'objet acquise en S4 lors de la phase S2 d'authentification. Dans ce cas, la génération S14 des données d'enrôlement digital DREF2 (et plus généralement la phase S10 d'enrôlement digital) peut être déclenchée par la carte à puce CD1 avant de déterminer en S8 si la phase S2 d'authentification a réussie (c'est-à-dire avant achèvement de la phase S2 d'authentification). La phase S10 d'authentification peut ainsi être exécutée en parallèle de (de façon concomitante à) la phase S2 d'authentification. De façon avantageuse, l'exécution de la phase S2 d'authentification peut être transparente pour l'utilisateur UR qui ne réalise alors pas nécessairement que les empreintes digitales qu'il présente au capteur d'empreinte digitale 8 servent à la fois pour l'authentifier et pour réaliser son enrôlement digital auprès de la carte.

Comme indiqué ci-avant, les empreintes digitale d'enrôlement PT2 utilisées lors de la phase S10 d'enrôlement peuvent être obtenues à différents stades du procédé. Selon un exemple particulier, au moins l'une des empreintes digital d'enrôlement PT2, à partir desquelles les données d'enrôlement digital DREF2 sont générées en S14, est une empreinte digitale PT2 acquise lors d'une étape S12 d'acquisition lors de la phase S10 d'enrôlement, indépendamment de l'acquisition S4 de la séquence SQ1. Ainsi, lors de la phase S10 d'enrôlement, la carte à puce CD1 peut faire une acquisition S12, par le capteur d'empreinte digitale 8, en tant qu'empreinte digital d'enrôlement PT2, d'au moins une empreinte digitale indépendamment de l'acquisition S4 de la séquence SQ1 d'empreintes d'objet PT1. De cette manière, la ou les empreintes digitales d'enrôlement PT2 obtenues lors de l'acquisition S12 est utilisée pour l'enrôlement digital de l'utilisateur UR lors de la phase S10 d'enrôlement mais ne sert pas pour authentifier cet utilisateur UR lors de la phase S2 d'authentification.

Selon un exemple particulier, la carte à puce CD1 utilise, en tant qu'empreinte d'enrôlement PT2, au moins une empreinte digitale PT1 acquise en S4 lors de la phase S2 d'authentification et réalise en outre l'étape S12 d'acquisition pour faire l'acquisition d'au moins une empreinte digitale d'enrôlement PT2 supplémentaire indépendamment de la séquence SQ1 acquise en S4, pour générer en S14 les données d'enrôlement digital DREF2. Il est par exemple possible d'authentifier en S2 l'utilisateur UR à partir d'un nombre donné d'empreintes digitales et d'utiliser, en plus de ces empreintes digitales (ou d'au moins une partie d'entre elles), des empreintes digitales supplémentaires acquises lors de la phase S10 d'enrôlement pour enrôler l'utilisateur UR.

Selon un exemple particulier, toutes les empreintes digitales d'enrôlement PT2, à partir desquelles les données d'enrôlement digital DREF2 sont générées en S14, sont des empreintes digitales PT2 acquises lors de l'étape S12 d'acquisition lors de la phase S10 d'enrôlement, indépendamment de l'acquisition S4 de la séquence SQ1. La phase S10 d'enrôlement peut alors être réalisée en parallèle ou après la phase S2 d'authentification. En particulier, la phase S10 d'enrôlement peut être initiée en réponse à la détermination en S8 que la phase S2 d'authentification est passée avec succès, comme déjà indiqué.

Une fois la phase S10 d'enrôlement achevée et si la phase S2 d'authentification a été déterminée en S8 **(****figure 5****)** comme ayant été passée avec succès, la carte à puce CD1 dispose en mémoire des données d'enrôlement digital DREF2 qu'elle peut utiliser comme modèle d'empreinte lors d'une phase d'authentification ultérieure pour vérifier l'authenticité d'un utilisateur UR. Ainsi, comme représenté en **figure 5****,** le procédé peut par exemple se poursuivre avec une deuxième phase S18 d'authentification postérieure à la phase S2 d'authentification. Au cours de cette phase S18 d'authentification, la carte à puce CD1 fait l'acquisition (S20) par le capteur d'empreinte digitale 8 d'au moins une nouvelle empreinte digitale PT3 (une seule ou une pluralité selon le cas) puis réalise une authentification (S22) à partir d'une comparaison de ladite au moins une nouvelle empreinte digitale PT3 avec les données d'enrôlement digital DREF2 enregistrées en S16 lors de la phase S10 d'enrôlement. En particulier, la carte à puce CD1 peut déterminer en S22 si ladite au moins une nouvelle empreinte digitale PT3 est valide en comparant ladite au moins une nouvelle empreinte digitale PT3 avec les données d'enrôlement digital DREF2. Ladite au moins une nouvelle empreinte digitale PT3 est alors déterminée comme valide si elle coïncide avec les (ou est conforme aux) données d'enrôlement digital DREF2. Dans le cas où une pluralité de nouvelles empreintes digitales PT3 sont acquises en S20, l'authentification S22 peut par exemple être considérée comme étant passée avec succès si toutes ces nouvelles empreintes digitales PT3 (ou au moins un nombre prédéterminé d'entre elles) sont conformes aux données d'enrôlement digital DREF2, sinon l'authentification est considérée comme ayant échoué.

Comme indiqué ci-avant, des variantes sont notamment possibles dans lesquelles la phase S10 d'enrôlement n'est pas initiée en réponse à la détermination en S8 que la phase S2 d'authentification est passée avec succès, mais est initiée en amont de la détermination S8, de sorte à être exécutée en parallèle de la phase S2 d'authentification. Dans ce cas, la carte à puce CD1 peut donc éventuellement exécuter les étapes S12 et S14 pour enregistrer les données d'enrôlement digital DREF2 (tout ou partie) avant même que la phase S2 d'authentification ne soit achevée, c'est-à-dire avant de déterminer en S8 le résultat de la phase S2 d'authentification. Aussi, lors de la phase S10 d'enrôlement, la carte à puce CD1 peut alors réaliser une étape d'effacement (non représentée) en réponse à la détermination en S8 que la phase S2 d'authentification a échoué. Lors de cette étape d'effacement, la carte à puce CD1 efface (supprime) de sa mémoire les données d'enrôlement digital DREF2 précédemment enregistrées en S16, ce qui permet de sécuriser le processus d'enrôlement digital dans le cas où l'utilisateur UR n'a pu être authentifié avec succès.

Par ailleurs, selon un exemple particulier, la séquence de référence SQ0 telle que définie par les données de référence DREF1 comprend une pluralité d'empreinte d'objet PT1 de sorte qu'au moins une empreinte d'objet PT1 d'un premier type d'empreinte TY1 soit intercalée dans le temps entre au moins deux empreintes d'objet PT1 d'un autre type d'empreinte TY2. La séquence de référence SQ0 définit ainsi une alternance entre plusieurs types d'empreintes (au moins deux types d'empreinte différents), ce qui permet de sécuriser l'authentification de l'utilisateur UR et donc le processus d'enrôlement digital. En effet, lors d'une phase d'enrôlement digitale, il peut paraître plus ergonomique et intuitif pour un utilisateur UR de présenter plusieurs fois un même premier doigt puis de présenter plusieurs fois un autre deuxième doigt sans avoir à faire ensuite à nouveau l'acquisition du premier doigt (ce qui reviendrait à faire des « allers-retours » d'acquisition entre plusieurs doigts). Ceci s'explique par le fait que le but d'un enrôlement digital n'est pas en théorie d'authentifier l'utilisateur mais d'acquérir ses empreintes digitales pour qu'elles servent de modèles d'empreinte par la suite. Or, il est possible grâce à l'invention de complexifier l'acquisition d'empreintes digitales PT1 lors de la phase S2 d'authentification en utilisant une séquence de référence SQ0 complexe qui nécessite des allers-retours d'acquisition entre plusieurs types différents d'empreinte digitale, ces empreintes digitales pouvant en outre servir au moins en partie pour générer les données d'enrôlement digitale DREF2 lors de la phase S10 d'enrôlement. L'enrôlement digital est ainsi sécurisé tout en limitant le nombre d'empreintes digitales qui doit être acquise par la carte.

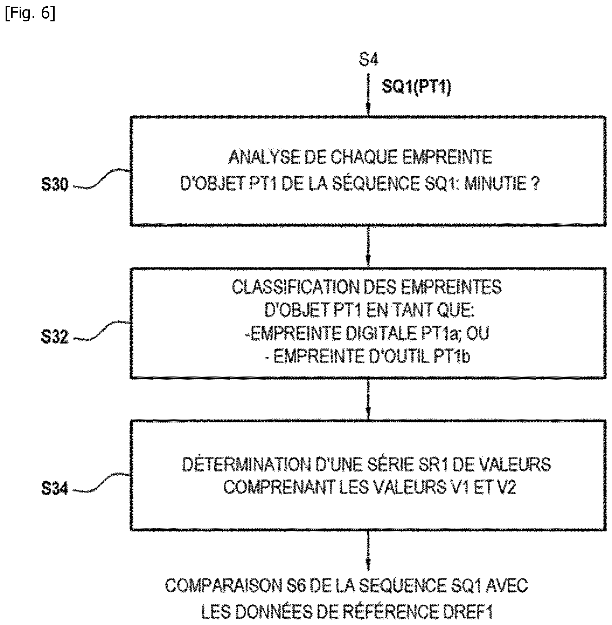

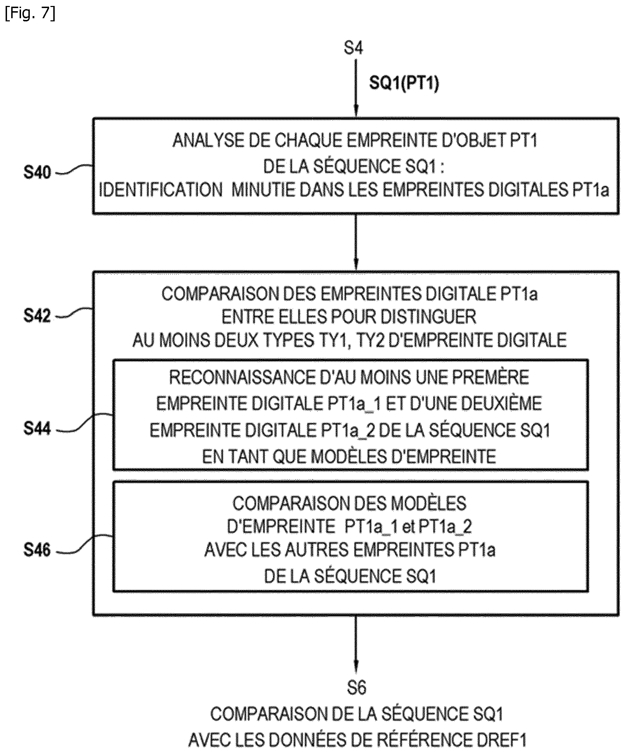

D'autres variantes d'implémentation des modes de réalisation décrits ci-avant en **figure 5** sont à présent décrites ci-après en référence aux **figures 6** et **7****.**

Selon un exemple particulier, on considère que la carte à puce CD1 **(****figures 1-3****)** réalise un procédé de traitement tel que représenté en **figure 5****,** dans lequel la séquence de référence SQ0 définie par les données de référence DREF1 est celle représentée en **figure 4A****.** Lors de la phase S2 d'authentification, la carte à puce CD1 réalise en outre des étapes S30 et S32, et éventuellement aussi une étape S34, telles que décrites ci-après.

Plus précisément lors d'une étape S30 d'analyse, la carte à puce CD1 analyse chaque empreinte d'objet PT1 composant la séquence SQ1 acquise en S4 pour déterminer si ladite empreinte d'objet PT1 comprend des minuties d'empreinte digitale. En particulier, la carte à puce CD1 détermine si des minuties caractérisant une empreinte digitale (la surface d'un doigt) sont présentes dans chaque empreinte d'objet PT1 acquise. De façon connue, toute empreinte digitale comprend par nature des minuties, à savoir des points caractéristiques formés par une disposition propre de lignes papillaires. Ces minuties caractérisent des points singuliers ou points d'irrégularité formés par les lignes papillaires (terminaisons, bifurcations, îlots, etc.).

Lors d'une étape S32 d'identification (ou de classification), la carte à puce CD1 identifie chaque empreinte d'objet PT1 de la séquence SQ1, soit en tant qu'empreinte d'outil correspondant à un premier type d'empreinte soit en tant qu'empreinte digitale correspondant au moins à un autre type d'empreinte, en fonction de si ladite empreinte d'objet PT1 comprend des minuties. A titre d'exemple, on suppose ici que la carte à puce CD1 classifie en S32 chaque empreinte d'objet PT1 de la séquence SQ1 acquise en S4, soit en tant qu'empreinte digitale correspondant à un premier type d'empreinte TY1 soit en tant qu'empreinte d'outil correspondant à un deuxième type d'empreinte TY2, en fonction de si ladite empreinte d'objet PT1 comprend des minuties. A noter toutefois que des variantes sont possibles dans lesquelles plusieurs types d'empreinte différents (noter par exemple TY1a, TY1b, etc.) correspondant à des empreintes digitales de doigts différents peuvent être définis dans la séquence de référence SQ0 en plus d'un type d'empreinte correspondant à une empreinte d'outil.

Lors de l'étape S32 d'identification, la carte à puce CD1 identifie donc le type d'empreinte de chaque empreinte d'objet PT1 de la séquence SQ1 à partir du résultat de l'étape S30 d'analyse. Si l'empreinte d'objet PT1 comprend des minuties représentatives de la surface d'un doigt, la carte à puce CD1 détermine que ladite empreinte est une empreinte digitale notée PT1a (de type TY1). En l'absence de telles minutie, la carte à puce CD1 détermine que l'empreinte d'objet PT1 considérée est une empreinte d'outil notée PT1b (de type TY2) représentative d'un outil (et non pas un doigt).

Ainsi, lors de la comparaison S6 réalisée dans la phase S2 d'authentification **(****figure 5****),** la carte à puce CD1 compare la séquence SQ1 comprenant des empreintes du premier et dudit au moins un autre type d'empreinte (à savoir des empreintes selon les types TY1 et TY2 dans cet exemple) avec la séquence de référence SQ0 comprenant des empreintes du premier et dudit au moins un autre type d'empreinte (à savoir des empreintes des types TY1 et TY2 dans cet exemple).

Selon une variante de réalisation, la carte à puce CD1 réalise en outre lors de la phase S2 d'authentification une étape S34 de détermination **(****figure 6****)** lors de laquelle la carte détermine, à partir du résultat de l'identification S32, une série SR1 de valeurs (appelée aussi un code de classification) représentative de la séquence SQ1 d'empreintes d'objet acquise en S4. Cette série SR1 de valeurs comprend au moins une première valeur V1 et une deuxième valeur V2 différente de la première valeur V1, de sorte que chaque empreinte d'objet PT1 identifiée en S32 en tant qu'empreinte digitale PT1a est indiquée par une occurrence de la première valeur V1 dans la série SR1 de valeurs et chaque empreinte d'objet PT1 identifiée en S32 en tant qu'empreinte d'outil PT1b est indiquée par une occurrence de la deuxième valeur V2 dans la série SR1 de valeurs. Autrement dit, la série SR1 comprend pour chaque empreinte d'objet PT1 une valeur représentative du type identifié pour ladite empreinte, ces valeurs étant ordonnées conformément à l'ordre dans lequel les empreintes d'objet PT1 ont été acquises en S4.

A titre d'exemple, on choisit V1=1 et V2=0 bien que d'autres implémentations soient possibles. Il est ainsi possible d'encoder le type de chaque empreinte d'objet PT1 sur un bit, la série SR1 de valeurs comprenant une succession de bits représentatifs respectivement du type de chaque empreinte d'objet PT1 selon l'ordre dans lequel les empreintes d'objet PT1 ont été acquises en S4. Les valeurs utilisées ainsi que le nombre de valeurs utilisées pour encoder la série SR1 peuvent être adaptés selon le cas, notamment en fonction du nombre de types différents d'empreinte d'objet prévu dans la séquence de référence SQ0.

La carte à puce CD1 peut par exemple enregistrer provisoirement les empreintes d'objet PT1 acquises lors de l'acquisition S4 pour réaliser la classification S32 et générer (S34) la série SR1. La classification S32, et éventuellement aussi la détermination S34, peuvent être réalisées dynamiquement au fur-et-à-mesure que les empreintes d'objet PT1 sont acquises en S4, ou éventuellement une fois que l'acquisition S4 est achevée.

Selon cette variante de réalisation, la carte à puce CD1 réalise ensuite la comparaison S6 **(****figure 5****)** à partir de la série SR1 de valeurs obtenue en S34. Plus particulièrement, la carte à puce CD1 compare (S6) la série SR1 de valeurs avec les données de référence DREF1. Pour ce faire, les données de référence peuvent définir, en tant que séquence de référence SQ0, une séquence de valeurs comprenant les première et deuxième valeurs V1, V2. Les données de référence DREF1 peuvent par exemple former une série de valeurs de référence égales à V1 ou V2, cette série pouvant par exemple présenter le même format que celui de la série SR1.

Selon un exemple particulier, on considère que la carte à puce CD1 **(****figures 1-3****)** réalise un procédé de traitement tel que représenté en **figure 5****,** dans lequel la séquence de référence SQ0 définie par les données de référence DREF1 est celle représentée en **figure 4B****.** Dans l'exemple considéré ici, lors de la phase S2 d'authentification, la carte à puce CD1 réalise une étape S40 d'analyse et une étape S42 de comparaison telles que représentées en **figure 7****.**

Plus précisément, lors d'une étape S40 d'analyse, la carte à puce CD1 analyse chaque empreinte d'objet PT1 de la séquence SQ1 d'empreintes d'objet acquise en S4 **(****figure 5****)** pour identifier des minuties (ou caractéristiques d'empreinte digitale) dans les empreintes digitales de la séquence SQ1. On suppose à titre d'exemple que toutes les empreintes d'objet PT1 sont des empreintes digitales PT1a produites par un doigt correspondant détecté par le capteur d'empreinte digitale 8 au cours de l'acquisition S4. Si des minuties caractéristiques d'une empreinte digitale ne peuvent être identifiées en S40 dans une empreinte d'objet PT1 donnée, la carte à puce CD1 en déduit qu'il ne s'agit pas d'une empreinte digitale ou que celle-ci ne présente pas une qualité suffisante pour pouvoir poursuivre le procédé. Dans ce cas, la carte à puce CD1 peut éventuellement requérir une nouvelle acquisition de l'empreinte considérée ou de toutes les empreintes de la séquence SQ1, ou encore mettre fin au procédé. Des variantes de réalisation sont toutefois possibles dans lesquelles, parmi les empreintes d'objet PT1 comprises dans la séquence SQ1 acquise en S4, une pluralité d'entre elles sont des empreintes digitales PT1a et au moins une d'entre elles est une empreinte d'outil PT1b. Dans ce cas particulier, la carte à puce CD1 détecte en S40 **(****figure 7****)** les empreintes d'objet PT1 constituant des empreintes digitales PT1a et traite ces empreintes digitales en exécutant l'étape S42 de comparaison qui suit à partir des empreintes digitales PT1a ainsi identifiées. La ou les empreintes d'outil PT1b identifiées dans la séquence SQ1 peuvent en outre être traitées comme décrit ci-avant comme appartenant à un type d'empreinte correspondant.

Lors de l'analyse S40, la carte à puce CD1 peut réaliser tout traitement approprié sur les empreintes digitales PT1a pour identifier des points caractéristiques formés par les lignes papillaires d'un doigt. La carte à puce CD1 peut par exemple déterminer, pour chaque empreinte digitale PT1a, un modèle de minuties représentatif d'un doigt de l'utilisateur UR.

Selon un exemple particulier, la carte à puce CD1 enregistre provisoirement les empreintes d'objet PT1 acquises lors de l'acquisition S4 (par exemple dans sa mémoire RAM 4) de sorte à pouvoir réaliser l'analyse S40.

Lors d'une étape S42 de comparaison, la carte à puce CD1 compare entre elles les empreintes digitales PT1a de la séquence SQ1 à partir des minuties identifiées en S40 de sorte à identifier au moins deux types différents d'empreinte digitale (notés TY1 et TY2) correspondant à au moins deux doigts différents. La carte à puce CD1 peut ainsi faire la distinction, dans la séquence SQ1, entre différents types d'empreinte digitale PT1a correspondant à différents doigts, sans toutefois pouvoir vérifier qu'il s'agit effectivement d'empreintes digitales de l'utilisateur UR considéré. Cette étape S42 de comparaison permet donc de déterminer un type d'empreinte respectif pour chacune des empreintes digitales de la séquence SQ1. On suppose dans cet exemple que la séquence SQ1 comprend des empreintes digitales PT1a selon deux types différents d'empreinte TY1 et TY2, bien que d'autres implémentations soient possibles avec un plus grand nombre de types d'empreinte différents (mixant éventuellement aussi des empreintes d'outil PT1b conformes à un autre type d'empreinte).

Comme déjà expliqué, la carte à puce CD1 ne dispose pas de modèle d'empreinte de référence de l'utilisateur UR de la carte puisque la phase d'enrôlement digital de cet utilisateur UR n'a pas encore eu lieu (comme déjà indiqué, la phase S10 d'enrôlement peut éventuellement être initiée avant que le résultat de la phase S2 d'authentification soit obtenu en S8, mais l'enrôlement digital n'est pas réalisé tant que ce résultat n'a pas été obtenu). La carte à puce CD1 compare donc les minuties des empreintes digitales PT1a de la séquence SQ1 pour déterminer quelles empreintes digitales correspondent à un même doigt et donc à un même type d'empreinte. Pour ce faire, la carte à puce CD1 applique par exemple un algorithme pour évaluer un degré de ressemblance, à partir de leurs minuties, des empreintes digitales PT1a de la séquence SQ1, de sorte à déterminer de quel type (à savoir TY1 ou TY2 dans cet exemple) est chacune de ces empreintes digitale PT1a.

Ainsi, lors de l'étape S6 de comparaison **(****figure 5****)** qui suit, la séquence SQ1 d'empreintes comprenant les deux types différents TY1, TY2 d'empreinte (ou au moins ces deux types TY1, TY2) est comparée avec la séquence de référence SQ0 définie par les données de référence DREF1. On considère dans cet exemple que la séquence de référence SQ0 comprend des empreintes selon deux types différents d'empreinte TY1, TY2 correspondant à deux doigts différents (qui peuvent être quelconques), bien que d'autres implémentations soient possibles dans lesquelles la séquence de référence SQ0 comprend un plus grand nombre de types différents d'empreinte (mixant éventuellement aussi des empreintes d'outil conforme à un autre type d'empreinte).

Selon un exemple particulier, la carte à puce CD1 réalise les étapes S44 et S46 **(****figure 7****)** au cours de l'étape S42 de comparaison. Lors de l'étape S44 d'identification, la carte à puce CD1 identifie une empreinte digitale PT1a respective de la séquence SQ1, en tant que modèle d'empreinte, pour chacun parmi lesdits au moins deux types différents d'empreinte digitale (à savoir les deux types d'empreinte TY1 et TY2 dans cet exemple) si (ou sur détection que) ladite empreinte digitale correspond à un doigt détecté pour la première fois dans la séquence SQ1. Par doigt détecté pour la première fois, on entend la première occurrence dans la séquence SQ1 d'une empreinte digitale PT1 correspondant au doigt considéré.

A titre d'exemple, on considère donc ici que la carte à puce CD1 détecte en S44, dans la séquence SQ1, une première empreinte digitale PT1a_1 (et respectivement une deuxième empreinte digitale PT1a_2 b) correspondant à un premier doigt (et respectivement à un deuxième doigt différent du premier doigt) détecté pour la première fois dans la séquence SQ1 au cours du temps. La carte à puce CD1 identifie alors la première empreinte digitale PT1a_1 et la deuxième empreinte digitale PT1a_2 b en tant que modèles d'empreintes selon le premier type TY1 (correspondant au premier doigt) et le deuxième TY2 (correspondant au deuxième doigt), respectivement.

Lors de l'étape S46 de comparaison **(****figure 7****),** la carte à puce CD1 compare ainsi chaque modèle d'empreinte identifié en S42 (à savoir les empreintes digitales PT1a_1 et PT1a_2 dans ce exemple) avec les autres empreintes digitales PT1a de la séquence SQ1 acquise en S4 **(****figure 5****)** de sorte à identifier chaque dite autre empreinte digitale en tant que l'un parmi lesdits au moins deux types différents d'empreinte digital. L'invention permet ainsi de distinguer de façon fiable et efficace, au sein de la séquence SQ1, différents types d'empreintes digitales correspondant à différents doigts, et ce sans que la carte ne dispose en mémoire à ce stade d'un modèle d'empreinte de l'utilisateur, c'est à dire d'un modèle d'empreinte digitale en tant que données digitales de référence.

Les deux étapes S44 et S46 peut éventuellement être réalisées simultanément (en parallèle) au cours de l'étape S42 de comparaison. Pour ce faire, la carte à puce CD1 peut analyser successivement chaque empreinte digitale PT1a survenant dans l'ordre chronologique au sein de la séquence SQ1 acquise en S4 **(****figure 5****)** et comparer ladite empreinte avec un ou des modèles d'empreinte déjà identifiés le cas échéant lors de l'étape S44 d'identification, pour déterminer si ladite empreinte constitue un modèle d'un nouveau type d'empreinte digital correspondant à un nouveau doigt détecté pour la première fois dans la séquence SQ1 ou à une empreinte digitale conforme à un modèle d'empreinte précédemment identifié dans la séquence SQ1. En d'autres termes, la carte à puce CD1 reconnait par exemple chaque empreinte digitale PT1a, acquise au cours du temps lors de la période d'acquisition PR1 et qui ne correspondent à aucun modèle d'empreinte digital existant, en tant que modèle d'empreinte représentatif d'un nouveau type d'empreinte. Ce traitement est effectué pour chaque empreinte digitale PT1a acquise conformément à l'ordre dans lequel les empreintes digitales ont été acquises en S4 dans la séquence SQ1. Le type de chaque empreinte digitale PT1a formant la séquence SQ1 peut ainsi être déterminé.

Selon une variante de réalisation, la carte à puce CD1 identifie en S44 **(****figure 7****)** au moins une première empreinte digitale PT1a_1 et une deuxième empreinte digitale PT1a_2, parmi la séquence d'empreinte SQ1, en tant que modèles d'empreinte d'au moins deux types différents d'empreinte digitale correspondant à au moins deux doigts différents, et ce en fonction d'une position respective des au moins une première et deuxième empreintes digitales PT1a_1 et PT1a_2 dans la séquence d'empreinte SQ1 acquise en S4. Lors de l'étape S46 de comparaison, la carte à puce CD1 peut ainsi comparer ces première et deuxième empreintes digitales PT1a_1 et PT1a_2 servant de modèles d'empreinte avec les autres empreintes digitales PT1a de la séquence d'empreintes SQ1 de sorte à identifier chaque dite autre empreinte digitale PT1a en tant que l'un parmi lesdits au moins deux types différents d'empreinte digital correspondant à au moins deux doigts différents.

A titre d'exemple, la carte à puce CD1 peut ainsi identifier (S44) les deux premières empreintes digitales PT1a acquises au cours du temps dans la séquence SQ1, à savoir lors d'une phase préliminaire PR2 de la période PR1 **(****figure 4B****),** en tant que modèles d'empreinte digitale représentatifs respectivement des types d'empreinte TY1 et TY2. Les deux premières empreintes digitales débutant la séquence SQ1 servent alors arbitrairement de modèles avec lesquels chacune autre empreinte digitale PT1a de la séquence SQ1 est comparée (S46) pour déterminer son type parmi TY1 et TY2. La carte à puce CD1 évalue (S46) par exemple un degré de ressemble de chaque autre empreinte digitale de la séquence SQ1 vis-à-vis de ces deux premières empreintes digitales, le type de chaque autre empreinte digitale étant celui de l'empreinte parmi ces deux premières empreintes digitales dont elle est le plus proche.

De façon générale, l'invention permet donc de réaliser un enrôlement digital sécurisé auprès d'une carte à puce comprenant un capteur d'empreinte digitale, y compris lorsque la carte à puce comporte des moyens limités en termes d'interface utilisateur comme cela est généralement le cas. En particulier, il est possible d'utiliser le capteur d'empreinte digital d'une carte à puce pour authentifier un utilisateur avant même (ou en parallèle à) l'exécution d'une phase d'enrôlement digital de cet utilisateur, et donc sans que la carte à puce n'ait besoin de disposer en mémoire d'un modèle d'empreinte de l'utilisateur en question. Un utilisateur peut de façon simple et ergonomique réaliser une séquence particulière d'empreintes d'objet, en utilisant un ou des doigts et/ou un ou des outils. L'authentification est passée avec succès si la séquence ainsi acquise par la carte à puce concorde avec une séquence de référence préenregistrée dans la carte. Il n'est ainsi pas nécessaire de faire coopérer la carte à puce avec un terminal tiers, tel qu'un smartphone ou autre, comprenant une interface utilisateur évoluée, ce qui permet de limiter les risques de sécurité liés au processus d'enrôlement digital.

L'invention permet de mettre à profit le capteur d'empreinte digitale d'une carte à puce pour authentifier un utilisateur avant même que celui-ci n'ai réalisé son enrôlement digital. En particulier, l'invention permet d'authentifier un utilisateur en utilisant divers objets, y compris des outils autres que des doigts ou toutes autres parties anatomiques. A l'aide d'une cuillère ou d'un autre instrument de la vie courante, ou encore en utilisant un outil dédié (fourni par exemple par l'émetteur de la carte), un utilisateur peut s'authentifier de façon sécurisée auprès de la carte à puce.

L'invention permet en particulier de sécuriser l'utilisation d'une carte à puce, notamment de transactions traitées par la carte. Ainsi, une fois l'enrôlement digital réalisé avec succès, la carte à puce peut authentifier un utilisateur lors du traitement d'une transaction. Selon le résultat d'une vérification d'empreinte digitale réalisée au moyen de son capteur d'empreinte digital, une carte à puce selon l'invention peut par exemple accepter ou rejeter une transaction, ce qui permet de limiter les risques d'utilisations frauduleuses de la carte.

Par ailleurs, comme déjà indiqué en référence à la **figure 5****,** la carte à puce CD1 peut générer en S14 des données d'enrôlement digital DREF2 à partir d'une ou de plusieurs empreintes digitales d'enrôlement PT2 acquises lors de l'étape S12 d'acquisition. En outre, pour accélérer le processus d'enrôlement digital tout en garantissant un bon niveau de sécurité, la carte à puce CD1 peut utiliser, en remplacement de ou en complément de ou en plus de la ou des empreintes digitales d'enrôlement PT2 acquises en S10, au moins une empreinte objet PT1 précédemment acquise en S4 lors de la phase d'authentification, ladite au moins une empreinte PT1 correspondant à une empreinte digitale. Autrement dit, la carte à puce CD1 peut aussi utiliser une ou des empreintes digitales PT1 acquises lors de la phase S2 d'authentification pour remplacer ou compléter les empreintes digitales d'enrôlement PT2 à partir desquelles sont générées les données d'enrôlement digital DREF2. Le processus d'enrôlement est amélioré (accéléré et sécurisé) dans la mesure où une même empreinte digitale peut servir à la fois pour authentifier un utilisateur UR lors de la phase S2 d'authentification et également pour enrôler ce même utilisateur UR lors de la phase S10 d'enrôlement digital.

Selon un exemple de réalisation particulier, la séquence de référence SQ0 telle que définie par les données de référence DREF1 comprend des empreintes d'outil selon au moins deux types d'empreinte différents. Dans ce cas, la carte à puce CD1 est capable, lors de la phase S2 d'authentification **(****figure 5****),** de détecter et d'analyser des empreintes d'outil TL1 comprises dans la séquence SQ1 acquise en S4, de sorte à identifier de quel type d'empreinte est ladite empreinte d'outil parmi au moins deux types d'empreinte différents correspondant à au moins deux outils différents. Pour ce faire, la carte à puce CD1 peut par exemple analyser des caractéristiques propres à des empreintes d'outil pour distinguer au moins deux types d'outil différents. En particulier, la carte à puce CD1 peut par exemple comparer entre elles les empreintes d'outil détectées dans la séquence SQ1 (de façon analogue aux empreintes digitales) pour identifier un modèle d'empreinte respectif pour chaque type d'empreinte correspondant à chaque outil considéré, et pour identifier le type auquel se rattache chaque autre empreinte d'outil de la séquence SQ1 par une évaluation d'un degré de ressemblance de chaque autre empreinte d'outil avec chaque modèle d'empreinte.

A noter que l'utilisateur UR souhaitant s'enrôler auprès de la carte à puce CD1 comme précédemment décrit peut être informé, par l'émetteur de la carte (par exemple par une banque) ou tout autre tiers prévu à ce effet, de la séquence de référence SQ0 à respecter durant la phase S2 d'authentification. La communication de cette séquence de référence SQ0 peut se faire selon toutes manières appropriées, par exemple via un support de communication quelconque connu de l'homme du métier autre que celui par lequel il a reçu la carte, par exemple par courrier papier ou par SMS envoyé à un terminal de communication de l'utilisateur UR.

Comme le comprend l'homme du métier, les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant, afin de répondre à un besoin bien particulier conformément aux revendications présentées ci-après.

## Revendications

1. Procédé de traitement mis en oeuvre par une carte à puce (CD1) comprenant un capteur d'empreinte digitale (8), le procédé comprenant :
a) une phase d'authentification (S2) comprenant :
a1) acquisition (S4) d'une séquence (SQ1) d'empreintes d'objet (PT1) à partir d'objets détectés au cours du temps par le capteur d'empreinte digitale (8) ;
a2) comparaison (S6) de la séquence (SQ1) d'empreintes d'objet acquise avec des données de référence (DREF1) préenregistrées dans la carte à puce (CD1), lesdites données de référence (DREF1) définissant une séquence de référence (SQO) d'empreintes d'objets selon au moins deux types d'empreinte différents (TY1, TY2) ; et
a3) détermination (S8) que la phase d'authentification est réussie si la séquence (SQ1) d'empreintes d'objet coïncide avec les données de référence (DREF1) ;
b) une phase d'enrôlement digital (S10) comprenant :
b1) génération (S14), à partir d'au moins une empreinte digitale (PT2), dite empreinte digitale d'enrôlement, de données d'enrôlement digital (DREF2); et
b2) enregistrement (S16) des données d'enrôlement digital (DREF2) de sorte à permettre une authentification digitale ultérieure à partir desdites données d'enrôlement digital.

2. Procédé selon la revendication 1, dans lequel le procédé comprend préalablement à la phase d'authentification :
- enregistrement des données de référence (DREF1) dans une mémoire de la carte à puce (CD1).

3. Procédé selon la revendication 1 ou 2, dans lequel la séquence de référence (SQO) à respecter lors de la phase d'acquisition (S4) comprend au moins deux groupes (GP) d'empreinte acquis séquentiellement au cours du temps, chaque groupe (GP) d'empreinte comprenant au moins une empreinte d'objet (PT1) acquise simultanément par le capteur d'empreinte digitale (8).

4. Procédé selon l'une quelconque des revendications 1 à 3, comprenant lors de la phase d'enrôlement b) :
b0) acquisition, par le capteur d'empreinte digitale, en tant qu'empreinte digitale d'enrôlement, d'au moins une empreinte digitale (PT2) indépendamment de l'acquisition a1) (S4) de la séquence d'empreintes d'objet.

5. Procédé selon l'une quelconque des revendications 1 à 4, dans lequel au moins une dite empreinte digitale d'enrôlement, à partir de laquelle sont générées en b1) les données d'enrôlement digital, est une empreinte digitale (PT2) acquise en a1) (S4) parmi la séquence (SQ1) d'empreintes d'objet.

6. Procédé selon l'une quelconque des revendications 1 à 5, dans lequel l'enregistrement b2) est réalisé avant la détermination a3), la phase d'enrôlement digitale (S10) comprenant en outre, suite à l'enregistrement b2) :
b3) effacement des données d'enrôlement digital (DREF2) en réponse à la détermination en a3) que la phase d'authentification a échoué.

7. Procédé selon l'une quelconque des revendications 1 à 5, dans lequel la phase (S10) d'enrôlement b) est déclenchée en réponse à la détermination (S8) en a3) que la phase d'authentification (S2) est réussie.

8. Procédé selon l'une quelconque des revendications 1 à 7, dans lequel selon la séquence de référence (SQ0), une empreinte d'objet d'un premier type (TY1) d'empreinte est intercalée dans le temps entre deux empreintes d'objet d'un autre type (TY2) d'empreinte.

9. Procédé selon l'une quelconque des revendications 1 à 8, dans lequel chaque objet détecté par le capteur d'empreinte digitale en a1) est un doigt (FG) ou un outil (TL1).

10. Procédé selon la revendication 9, dans lequel la phase d'authentification (S2) comprend :
- analyse (S30) de chaque empreinte d'objet (PT1) de la séquence (SQ1) d'empreintes d'objet acquise en a1) pour déterminer si ladite empreinte d'objet comprend des minuties ;
- identification (S32) de chaque empreinte d'objet (PT1) de la séquence (SQ1) d'empreintes d'objet acquise, soit en tant qu'empreinte d'outil (TL1) correspondant à un premier type d'empreinte soit en tant qu'empreinte digitale (FG) correspondant au moins un autre type d'empreinte, en fonction de si ladite empreinte d'objet comprend des minuties ;
dans lequel, lors de la comparaison a2) (S6), la séquence (SQ1) d'empreintes d'objet acquise comprenant des empreintes du premier et dudit au moins un autre type d'empreinte est comparée avec la séquence de référence (SQ0) comprenant des empreintes du premier et dudit au moins un autre type d'empreinte.

11. Procédé selon la revendication 10, dans lequel la phase d'authentification comprend :
- détermination (S34) d'une série (SR1) de valeurs représentative de la séquence (SQ1) d'empreintes d'objet acquise, dans lequel chaque empreinte d'objet identifiée en tant qu'empreinte digitale est indiquée dans la série (SR1) de valeurs par une occurrence d'une première valeur et chaque empreinte d'objet identifiée en tant qu'empreinte d'outil est indiquée dans la série de valeurs par une occurrence d'une deuxième valeur différente de la première valeur ; et
dans lequel, lors de la comparaison a2), la série (SR1) de valeur représentant la séquence (SQ1) d'empreintes d'objet acquise est comparée avec les données de référence (DREF1) qui définissent, en tant que séquence de référence (SQ0), une séquence de valeurs comprenant les première et deuxième valeurs.

12. Procédé selon l'une quelconque des revendications 1 à 11, dans lequel la séquence (SQ1) d'empreintes d'objet (PT1) acquise comprend des empreintes digitales, la phase d'authentification comprenant :
- analyse (S40) de chaque empreinte digitale (PT1) de la séquence (SQ1) d'empreintes d'objet acquise en a1) (S4) pour identifier des minuties dans les empreintes digitales de ladite séquence (SQ1) d'empreintes d'objet acquise;
- comparaison (S42) entre elles des empreintes digitales de ladite séquence (SQ1) d'empreintes d'objet (PT1) acquise à partir des minuties identifiées de sorte à identifier au moins deux types différents (TY1, TY2) d'empreinte digitale correspondant à au moins deux doigts différents ;
dans lequel, lors de la comparaison a2), la séquence (SQ1) d'empreintes d'objet acquise comprenant lesdits au moins deux types différents (TY1, TY2) d'empreinte digitale est comparée avec la séquence de référence (SQ0) comprenant des empreintes digitales correspondant au moins à deux doigts différents.

13. Procédé selon la revendication 12, dans laquelle la phase d'authentification (S2) comprend :
- Identification (S44) d'une empreinte digitale respective de la séquence d'empreintes d'objet acquise, en tant que modèle d'empreinte (PT1a_1, PT1a_2), pour chacun parmi lesdits au moins deux types différents (TY1, TY2) d'empreinte digitale si ladite empreinte digitale correspond à un doigt détecté pour la première fois dans la séquence (SQ1) d'empreintes d'objet acquise ;
chaque modèle d'empreinte (PT1a_1, PT1a_2) étant comparé (S46) avec les autres empreintes digitales de la séquence (SQ1) d'empreintes d'objet de sorte à identifier chaque dite autre empreinte digitale en tant que l'un parmi lesdits au moins deux types différents (TY1, TY2) d'empreinte digital.

14. Programme d'ordinateur (PG1) comportant des instructions pour l'exécution des étapes d'un procédé de traitement selon l'une quelconque des revendications 1 à 13 lorsque ledit programme est exécuté par un ordinateur.

15. Carte à puce (CD1) comprenant :
- un capteur d'empreinte digitale (8) ;
- un module d'authentification (MD2) configuré pour :
∘ acquérir une séquence (SQ1) d'empreintes d'objet (PT1) à partir d'objets détectés au cours du temps par le capteur d'empreinte digitale (8);
∘ comparer la séquence d'empreintes d'objet acquise avec des données de référence (DREF1) préenregistrées dans la carte à puce, lesdites données de référence définissant une séquence de référence (SQ0) d'au moins deux types d'empreinte différents (TY1, TY2) ; et
∘ déterminer que la phase d'authentification est réussie si la séquence (SQ1) d'empreintes d'objet (PT1) coïncide avec les données de référence (DREF1) ;
- un module d'enrôlement configuré pour :
∘ générer, à partir d'au moins une empreinte digitale (PT2), dite empreinte digitale d'enrôlement, des données d'enrôlement digital (DREF2) ; et
∘ enregistrer des données d'enrôlement digital (DREF2) de sorte à permettre une authentification digitale ultérieure à partir desdites données d'enrôlement digital.
